# EUROPEAN PATENT SPECIFICATION

(11) **EP 4 398 614 B1**
(45) Date of publication and mention of the grant of the patent: **12.02.2025**
(21) Application number: 23841169.8
(22) Date of filing: 24.08.2023
(51) Int. Cl.: H04W 4/80

(54) **DATA PROCESSING METHOD AND SYSTEM, ELECTRONIC DEVICE, BLUETOOTH PERIPHERAL AND STORAGE MEDIUM**
DATENVERARBEITUNGSVERFAHREN UND -SYSTEM, ELEKTRONISCHE VORRICHTUNG, BLUETOOTH-PERIPHERIEGERÄT UND SPEICHERMEDIUM
PROCÉDÉ ET SYSTÈME DE TRAITEMENT DE DONNÉES, DISPOSITIF ÉLECTRONIQUE, PÉRIPHÉRIQUE BLUETOOTH ET SUPPORT DE STOCKAGE

(30) Priority: 16.11.2022 CN 202211430411
(43) Date of publication of application: 10.07.2024
(73) Proprietor: Honor Device Co., Ltd., Shenzhen, Guangdong 518040 (CN)
(72) Inventor: FU, Lei, Guangdong 518040 (CN)
(74) Representative: Gill Jennings & Every LLP
(86) International application number: PCT/CN2023/114729
(87) International publication number: WO 2024/103888

(56) References cited:
- WO-A1-2006/029548
- CN-A- 105 828 134
- CN-A- 111 131 885
- CN-A- 111 757 218
- CN-A- 111 866 831
- CN-A- 114 430 528
- CN-A- 115 086 925

## Description

This application claims priority to Chinese Patent Application No. 202211430411.5, filed with the China National Intellectual Property Administration on November 16, 2022 and entitled "DATA PROCESSING METHOD AND SYSTEM, ELECTRONIC DEVICE, BLUETOOTH PERIPHERAL, AND STORAGE MEDIUM".

### TECHNICAL FIELD

This application relates to the field of computer technologies, and in particular to a data processing method and system, an electronic device, a Bluetooth peripheral, and a storage medium.

### BACKGROUND

In a daily use process, a scenario in which a distance is lengthened between a Bluetooth peripheral and an electronic device exists inevitably. In the scenario in which a distance is lengthened, an increase in the distance between the Bluetooth peripheral and the electronic device causes quality of a Bluetooth signal to be poor, and further causes packet loss and retransmission of Bluetooth audio data. This leads to freezing of the Bluetooth audio data and affects user experience.

In CN 111131885 A, a playing control method is disclosed, comprising detecting first signal intensity between the first electronic equipment and a currently connected Bluetooth earphone; under the condition that the first signal intensity meets a first condition, determining target second electronic equipment from at least one second electronic equipment, and sending the currently played content of the first electronic equipment to the target second electronic equipment.

In CN 111866831 A, a connection control method is disclosed, comprising steps that first signal strength of a communication signal between terminal equipment and wearable equipment and second signal strength of a communication signal between relay equipment and the wearable equipment are acquired; a target connection mode between the wearable device and the terminal device is determined according to the first signal intensity and the second signal intensity.

### SUMMARY

The invention is defined by the independent claims. Further embodiments of the invention are defined by the dependent claims.

### BRIEF DESCRIPTION OF DRAWINGS

To describe technical solutions in embodiments of this application more clearly, the following briefly describes accompanying drawings for embodiments. Apparently, the accompanying drawings in the following descriptions show merely some embodiments of this application, and a person of ordinary skill in the art may derive other drawings from these accompanying drawings without creative efforts.
FIG. 1 is a schematic diagram of a scenario in which a distance is lengthened according to an embodiment of this application;
FIG. 2 is a schematic diagram of a structure of a terminal device according to an embodiment of this application;
FIG. 3 is a schematic diagram of signaling of a data processing method according to an embodiment of this application;
FIG. 4A is a schematic diagram of measuring link quality based on an RSSI according to an embodiment of this application;
FIG. 4B is a schematic diagram of measuring link quality based on a distance according to an embodiment of this application;
FIG. 5 is a first schematic diagram of an audio data transmission manner according to an embodiment of this application;
FIG. 6 is a first schematic diagram of an audio data transmission manner based on a relay device according to an embodiment of this application;
FIG. 7 is a second schematic diagram of an audio data transmission manner based on a relay device according to an embodiment of this application;
FIG. 8A is a second schematic diagram of an audio data transmission manner according to an embodiment of this application;
FIG. 8B is a third schematic diagram of an audio data transmission manner according to an embodiment of this application;
FIG. 8C is a fourth schematic diagram of an audio data transmission manner according to an embodiment of this application;
FIG. 9 is a first schematic flowchart of a data processing method according to an embodiment of this application;
FIG. 10 is a second schematic flowchart of a data processing method according to an embodiment of this application;
FIG. 11 is a third schematic flowchart of a data processing method according to an embodiment of this application;
FIG. 12 is a schematic diagram of a structure of a data processing system according to an embodiment of this application;
FIG. 13 is a schematic diagram of a structure of an electronic device according to an embodiment of this application; and
FIG. 14 is a schematic diagram of a structure of a Bluetooth peripheral according to an embodiment of this application.

### DESCRIPTION OF EMBODIMENTS

The following clearly and completely describes technical solutions in embodiments of this application with reference to accompanying drawings in embodiments of this application.

To clearly describe technical solutions in embodiments of this application, terms such as "first" and "second" are used in embodiments of this application to distinguish between same items or similar items that provide basically same functions or purposes. For example, a first instruction and a second Instruction are intended to distinguish between different user instructions and do not limit an order thereof. A person skilled in the art may understand that the words "first", "second", and the like do not limit a quantity and an execution order, and the words "first", "second", and the like are not limited to be necessarily different.

It should be noted that, in this application, the word "example" or "for example" is used to represent giving an example, an illustration, or a description. Any embodiment or design scheme described as "example" or "for example" in this application should not be construed as being preferred or having more advantages than another embodiment or design scheme. Exactly, use of the word "example", "for example", or the like is intended to present a relative concept in a specific manner.

In a daily use process, a scenario in which a distance is lengthened between a Bluetooth peripheral and an electronic device exists inevitably. For example, in an office scenario, the electronic device is placed at an office position, and a user wears a Bluetooth peripheral to go get water, go to a toilet, or the like. In a sports field scenario, an electronic device is placed on a side of the field, and a user wears a Bluetooth peripheral to engage in sports activities such as running.

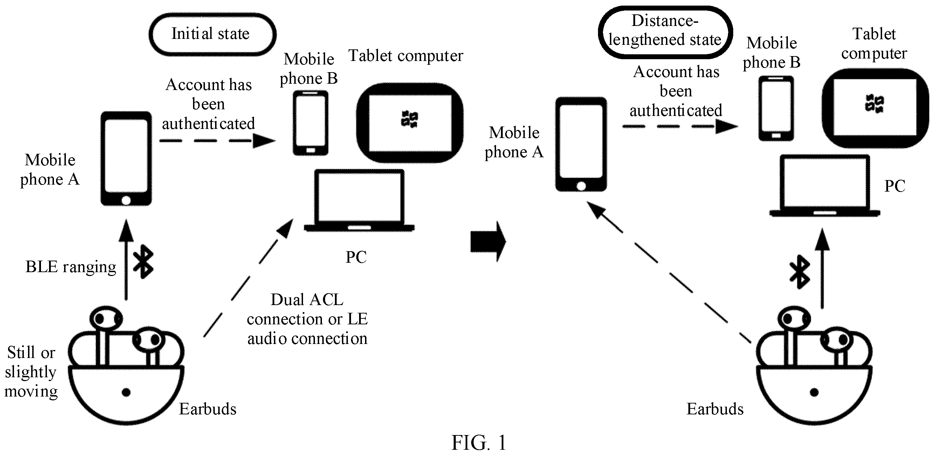

For example, the Bluetooth peripheral is earbuds, and the electronic devices are a mobile phone, a tablet computer, and a PC. FIG. 1 shows an example of a schematic diagram of a scenario in which a distance is lengthened according to an embodiment of this application. In FIG. 1, a plurality of electronic devices include a mobile phone A, a mobile phone B, a tablet computer, a PC, and the like. The mobile phone A, the mobile phone B, the tablet computer, the PC, and the like are connected through account authentication. In an initial state, the earbuds are in a still state or slightly moving state, and the earbuds are connected to the mobile phone A through Bluetooth. As a user moves while wearing the earbuds, a distance between the earbuds and the mobile phone A increases, and the earbuds and the mobile phone A are in a distance-lengthened state. In FIG. 1, the earbuds support an asynchronous connection-less link (Asynchronous Connection-less Link, ACL) connection, an LE audio connection, and BLE ranging.

In the scenario in which a distance is lengthened, an increase in the distance between the Bluetooth peripheral and the electronic device causes quality of a Bluetooth signal to be poor, and further causes packet loss and retransmission of Bluetooth audio data. This leads to freezing of the Bluetooth audio data and affects user experience.

In embodiments of this application, the electronic device may be an electronic device such as a mobile phone, a tablet computer, a personal computer (personal computer, PC), a personal digital assistant (personal digital assistant, PDA), a notebook computer, a wearable electronic device (such as a watch or a bracelet), an augmented reality (augmented reality, AR) device, a virtual reality (virtual reality, VR) device, a robot, smart glasses, or a smart TV. The Bluetooth peripheral may be a device including a Bluetooth module, such as Bluetooth earbuds, a smart speaker, a smart bracelet, or a smart watch.

To better understand embodiments of this application, the following describes a structure of the electronic device and a structure of the Bluetooth peripheral in embodiments of this application.

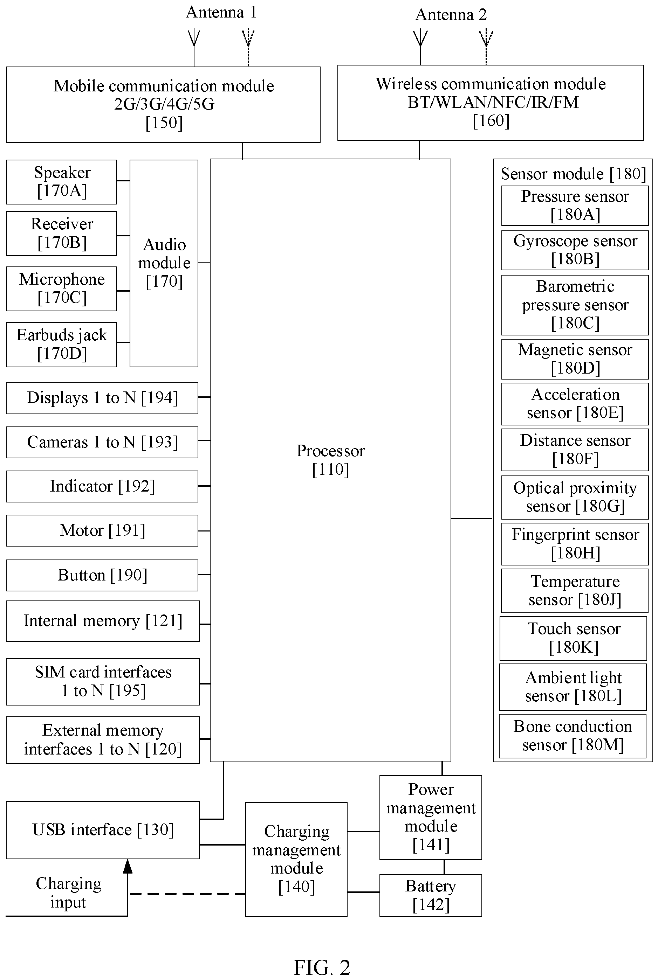

FIG. 2 shows a schematic diagram of a structure of a terminal device according to an embodiment of this application. The terminal device may be the foregoing electronic device or Bluetooth peripheral. The terminal device shown in FIG. 2 may include a processor 110, an external memory interface 120, an internal memory 121, a universal serial bus (Universal Serial Bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earbuds jack 170D, a sensor module 180, a button 190, a motor 191, an indicator 192, a camera 193, a display 194, a subscriber identity module (Subscriber Identity Module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the terminal device. In some other embodiments of this application, the terminal device may include more or fewer components than those shown in the figure, some components may be combined, some components may be split, or different component arrangements may be used. The components shown in the figure may be implemented by using hardware, software, or a combination of software and hardware.

The processor 110 may include one or more processing units. For example, the processor 110 may include an application processor (Application Processor, AP), a modem (modem) processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be separate devices or may be integrated into one or more processors.

The processor 110 may generate an operation control signal based on instruction operation code and a timing signal, to complete control of instruction fetch and instruction execution.

A memory may be further disposed in the processor 110 and is configured to store instructions and data. In some embodiments, the memory in the processor 110 may be a cache. The memory may store instructions or data that has been recently used or cyclically used by the processor 110. If the processor 110 needs to use the instructions or the data again, the instructions or the data may be invoked directly from the memory, to prevent repeated access and reduce waiting time for the processor 110, improving system efficiency.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, and the like.

The I2C interface is a bidirectional synchronous serial bus, including a serial data line (Serial Data Line, SDA) and a serial clock line (Serial Clock Line, SCL). In some embodiments, the processor 110 may include a plurality of I2C interfaces. The processor 110 may be separately coupled to the touch sensor 180K, a charger, a flash, the camera 193, and the like through different I2C interfaces. For example, the processor 110 may be coupled to the touch sensor 180K through the I2C interface. This enables the processor 110 to communicate with the touch sensor 180K through the I2C interface, to implement a touch function of the terminal device. In some embodiments, the terminal device may include one or N cameras 193, where N is a positive integer greater than 1.

The I2S interface may be used for audio communication. In some embodiments, the processor 110 may include a plurality of I2S interfaces. The processor 110 may be coupled to the audio module 170 through the I2S interface, to implement communication between the processor 110 and the audio module 170. In some embodiments, the audio module 170 may transmit an audio signal to the wireless communication module 160 through the I2S interface, to implement a function of answering a call through Bluetooth earbuds.

The PCM interface may also be used to: perform audio communication, and sample, quantize, and encode an analog signal. In some embodiments, the audio module 170 may be coupled to the wireless communication module 160 through a PCM interface. The audio module 170 may transmit, by using the wireless communication module 160, obtained downlink audio stream data and obtained uplink audio stream data to a terminal device that is wirelessly connected to the terminal device.

In some embodiments, the audio module 170 may alternatively transmit an audio signal to the wireless communication module 160 through the PCM interface, to implement a function of answering a call through Bluetooth earbuds. Both the I2S interface and the PCM interface may be used to perform audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 by using a UART interface, to implement a function of obtaining downlink audio stream data by using a terminal device connected through Bluetooth.

The MIPI interface may be used to connect the processor 110 and peripheral devices such as the display 194 and the camera 193. The MIPI interface includes a camera serial interface (Camera Serial Interface, CSI), a display serial interface (Display Serial Interface, DSI), and the like. In some embodiments, the processor 110 communicates with the camera 193 by using the CSI interface, to implement a photographing function of the terminal device. The processor 110 communicates with the display 194 through the DSI, to implement a display function of the terminal device.

It may be understood that an interface connection relationship between the modules illustrated in this embodiment of this application is merely an example for description, and does not constitute a limitation on the structure of the terminal device. In some other embodiments of this application, an interface connection manner different from an interface connection manner in the foregoing embodiment, or a combination of a plurality of interface connection manners may be used for the terminal device.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be multiplexed to increase antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the terminal device and that includes 2G, 3G, 4G, 5G, and the like. In some embodiments, transmission of call data between two terminal devices may be implemented by using the mobile communication module 150. For example, when a terminal device is used as a called device, the terminal device may obtain downlink audio stream data from a calling device, and transmit uplink audio stream data to the calling device.

The wireless communication module 160 may provide a wireless communication solution that is applied to the terminal device and that includes a wireless local area network (Wireless Local Area Networks, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (infrared, IR) technology, and the like.

In some embodiments, the antenna 1 and the mobile communication module 150 in the terminal device are coupled, and the antenna 2 and the wireless communication module 160 are coupled. This enables the terminal device to communicate with a network and another device by using a wireless communication technology. In an embodiment of this application, the terminal device may implement local network connection to another terminal device by using the wireless communication module 160. The wireless communication technology may include a global system for mobile communication (Global System for Mobile Communication, GSM), general packet radio service (General Packet Radio Service, GPRS), code division multiple access (Code Division Multiple Access, CDMA), wideband code division multiple access (Wideband Code Division Multiple Access, WCDMA), time-division-synchronous code division multiple access (Time-Division-Synchronous Code Division Multiple Access, TD-SCDMA), long term evolution (Long Term Evolution, LTE), BT, GNSS, WLAN, NFC, FM, IR, and/or the like. The GNSS may include a global positioning system (Global Positioning System, GPS), a global navigation satellite system (Global Navigation Satellite System, GLONASS), a Beidou navigation satellite system (Beidou Navigation Satellite System, BDS), a quasi-zenith satellite system (Quasi-Zenith Satellite System, QZSS), a satellite based augmentation system (Satellite Based Augmentation System, SBAS), and/or the like.

The display 194 is configured to display an image, a video, and the like. The display 194 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light Emitting Diode, AMOLED), a flex light-emitting diode (Flex Light-Emitting Diode, FLED), a mini-LED, a micro-LED, a micro-OLED, a quantum dot light-emitting diode (quantum dot light-emitting diode, QLED), or the like. In some embodiments, the terminal device may include one or N displays 194, where N is a positive integer greater than 1.

The external memory interface 120 may be used to connect to an external storage card such as a micro secure digital (Secure Digital, SD) memory card, to extend a storage capability of the terminal device. The external memory card communicates with the processor 110 through the external memory interface 120, to implement a data storage function. For example, files such as music, a video, or a recording file are stored in the external storage card. In some embodiments, the terminal device may include one or N external memory interfaces 120, where N is a positive integer greater than 1.

The internal memory 121 may be configured to store computer-executable program code. The executable program code includes instructions. The internal memory 121 may include a program storage area and a data storage area. The program storage area may store an operating system, an application for at least one function (for example, a sound playback function, an image playback function, and a recording function), and the like. The data storage area may store data (for example, uplink audio data, downlink audio data, and contacts) created during the use of the terminal device. In addition, the internal memory 121 may include a high-speed random access memory, and may further include a nonvolatile memory, for example, at least one magnetic disk storage device, a flash storage device, and a universal flash storage (Universal Flash Storage, UFS). The processor 110 executes the functional applications and data processing of the terminal device by executing instructions stored in the internal memory 121 and/or instructions stored in a memory in the processor 110.

The terminal device may implement an audio function by using the audio module 170, the speaker 170A, the receiver 170B, the microphone 170C, the earbuds jack 170D, and the application processor, such as music playback and audio recording.

The audio module 170 is configured to convert digital audio information into an analog audio signal for output, and is also configured to convert the analog audio signal into a digital audio signal for input. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device may listen to music or receive a hands-free call by using the speaker 170A.

The receiver 170B, also referred to as an "earpiece", is configured to convert an audio electrical signal into a sound signal. When the terminal device receives a call or a voice message, voice transmitted by a calling device may be listened by using the receiver 170B.

The microphone 170C, also referred to as a "mike" or a "mic", is configured to convert a sound signal into an audio electrical signal. When making a call or sending a voice message, a user may make a sound near the microphone 170C through a mouth of the user, to input a sound signal to the microphone 170C, implementing capturing of uplink audio stream data.

The earbuds jack 170D is configured to connect to wired earbuds. The earbuds jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display 194. In some embodiments, when the user taps and presses an answer key on the display 194, a function of manually answering a call may be implemented. When the user taps and presses a hang-up key on the display 194, a function of manually hanging up a call may be implemented.

The touch sensor 180K is also referred to as a "touch device". The touch sensor 180K may be disposed in the display 194, and the touch sensor 180K and the display 194 form a touchscreen, which is also referred to as a "touchscreen". The touch sensor 180K is configured to detect a touch operation performed on or near the touch sensor 180K. The touch sensor 180K may transmit the detected touch operation to the application processor, to determine a type of a touch event, and provide a visual output related to the touch operation by using the display 194. In some other embodiments, the touch sensor 180K may alternatively be disposed on a surface of the terminal device at a position different from a position of the display 194.

The button 190 includes a power button, a volume button, and the like. The button 190 may be a mechanical button, or may be a touch button. The terminal device may receive a button input and generate a button signal input related to user settings and function control of the terminal device.

The motor 191 may generate a vibration prompt. The motor 191 may be configured to provide an incoming call vibration prompt or a touch vibration feedback. For example, after an incoming call signal is received, the motor 191 vibrates to prompt the user that a call is to be answered.

The SIM card interface 195 is configured to connect to a SIM card. The SIM card may be inserted into the SIM card interface 195 or plugged from the SIM card interface 195, to connect the SIM card to or remove the SIM card from the terminal device. The terminal device may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The terminal device may interact with a network through the SIM card, to implement functions such as call and data communication. In some embodiments, the terminal device uses an eSIM, namely, an embedded SIM card. The eSIM card may be embedded in the terminal device, and cannot be separated from the terminal device.

A part of content of the method described in this embodiment of this application is implemented by the processor 110 shown in FIG. 2. A data processing method provided in an embodiment of this application is described in detail below with reference to specific embodiments.

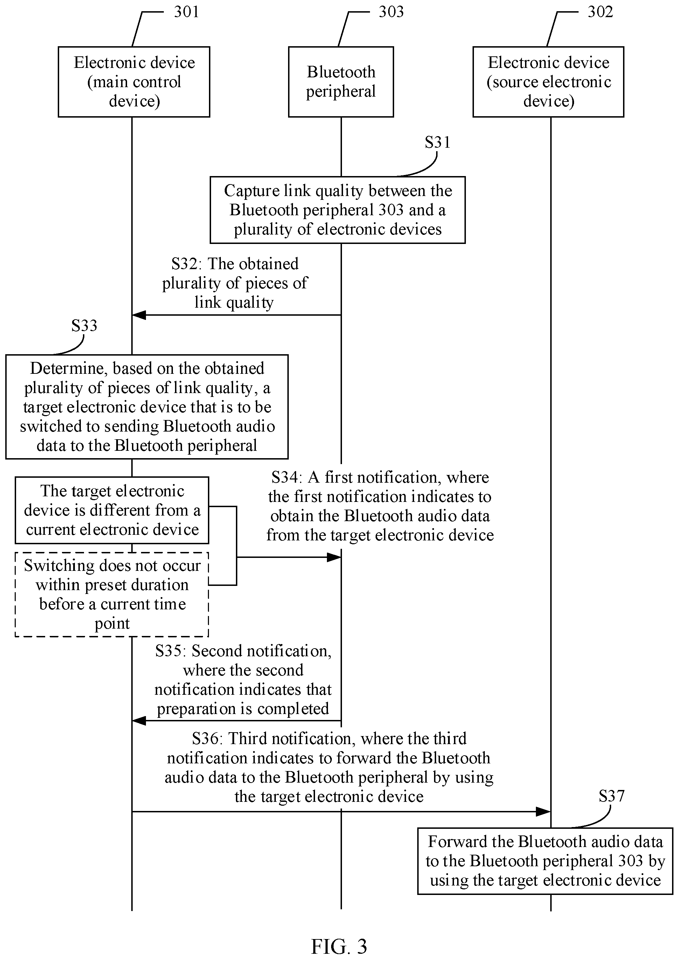

FIG. 3 is a schematic diagram of first signaling of a data processing method according to an embodiment of this application. The data processing method is applied to a data processing system. The system includes a plurality of electronic devices and a Bluetooth peripheral. In FIG. 3, only two electronic devices 301 and 302 are used as an example for description, which are not limited thereto. The two electronic devices 301 and 302 are authorized to be connected. In this embodiment of this application, a manner in which the two electronic devices are authorized to be connected may be as follows: The two electronic devices access a same Wi-Fi network. To improve security, a manner in which the two electronic devices are authorized to be connected may alternatively be as follows: The two electronic devices access a same Wi-Fi network, authentication of the two electronic devices is performed through logging in to a same account, a near field connection is established between the two electronic devices, and the two electronic devices are in one trust circle. In FIG. 3, a main control device may be an electronic device 301, an electronic device 302, or a Bluetooth peripheral 303. The following uses an example in which the electronic device 301 is the main control device, and the electronic device 302 is a source electronic device, which is not limited thereto. The source electronic device is an electronic device that obtains Bluetooth audio data from a remote device and that is of a plurality of electronic devices. In addition, for ease of understanding, in the following, an electronic device that currently sends the Bluetooth audio data to the Bluetooth peripheral 303 is referred to as a current electronic device. The current electronic device may also be referred to as an active device. An electronic device, except the current electronic device, of the plurality of electronic devices is referred to as another electronic device. The remote device may include but is not limited to a device such as a base station, a mobile phone, a server, or a router. For a structure of the remote device, refer to FIG. 2.

As shown in FIG. 3, the data processing method provided in this embodiment of this application includes the following steps.

Step S31: The Bluetooth peripheral 303 captures link quality between the Bluetooth peripheral 303 and the plurality of electronic devices.

In this embodiment of this application, the link quality may be measured by an RSSI, or may be measured by a distance.

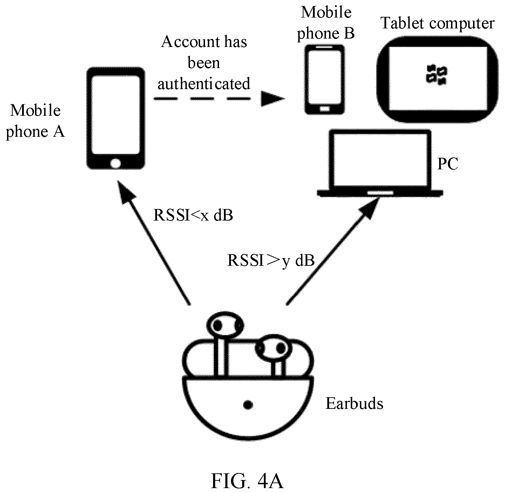

When the link quality is measured by the RSSI, the Bluetooth peripheral 303 captures an RSSI between the Bluetooth peripheral 303 and the electronic device 301, and captures an RSSI between the Bluetooth peripheral 303 and the electronic device 302. A larger value of an RSSI indicates higher link quality, and higher Bluetooth signal quality. Correspondingly, a smaller value of an RSSI indicates lower link quality and lower Bluetooth signal quality. As shown in FIG. 4A, a plurality of electronic devices include a mobile phone A, a mobile phone B, a tablet computer, a PC, and the like. The mobile phone A, the mobile phone B, the tablet computer, the PC, and the like are connected through account authentication. The mobile phone A is the current electronic device, and the mobile phone B, the tablet computer, the PC, and the like are other electronic devices. The Bluetooth peripheral is earbuds. The earbuds capture RSSIs between the earbuds and the plurality of electronic devices.

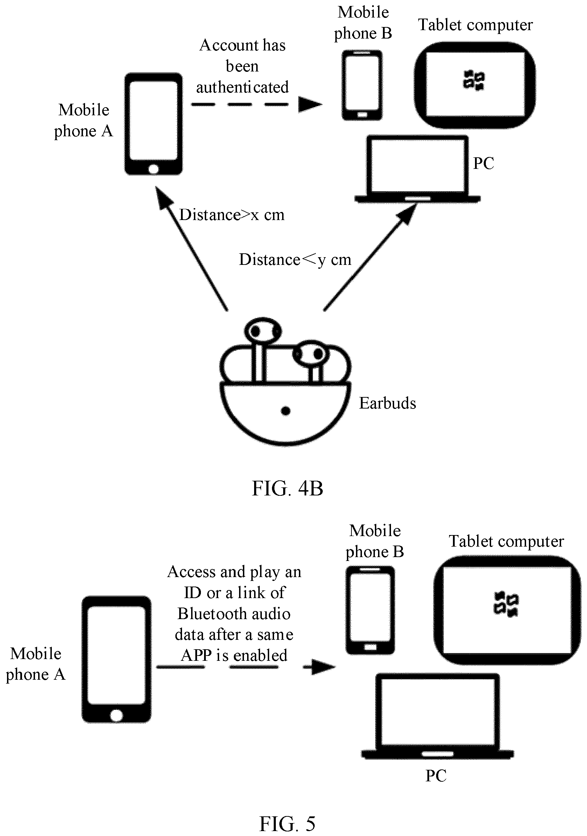

When the link quality is measured by the distance, the Bluetooth peripheral 303 captures a distance between the Bluetooth peripheral 303 and the electronic device 301, and captures a distance between the Bluetooth peripheral 303 and the electronic device 302. A smaller distance indicates higher link quality and higher Bluetooth signal quality. Correspondingly, a larger distance indicates lower link quality and lower Bluetooth signal quality. As shown in FIG. 4B, a plurality of electronic devices include a mobile phone A, a mobile phone B, a tablet computer, a PC, and the like. The mobile phone A, the mobile phone B, the tablet computer, the PC, and the like are connected through account authentication. The mobile phone A is the current electronic device, and the mobile phone B, the tablet computer, the PC, and the like are other electronic devices. The Bluetooth peripheral is earbuds. The earbuds capture distances between the earbuds and the plurality of electronic devices.

In this embodiment of this application, the Bluetooth peripheral 303 may measure the distances between the Bluetooth peripheral and the plurality of electronic devices by using a BLE ranging algorithm, or may measure relative positions of the Bluetooth peripheral and the plurality of electronic devices by using an AoA positioning algorithm or an AoD indoor positioning algorithm, to calculate the distances between the Bluetooth peripheral and the plurality of electronic devices.

In this embodiment of this application, the link quality may alternatively be measured by using another parameter, as long as the parameter can reflect the Bluetooth signal quality.

Step S32: The Bluetooth peripheral 303 sends the obtained plurality of pieces of link quality to the electronic device 301.

The electronic device 301 is the main control device. After capturing the plurality of pieces of link quality, the Bluetooth peripheral 303 sends the captured plurality of pieces of link quality to the main control device, namely, the electronic device 301.

In this embodiment of this application, when the Bluetooth peripheral 303 is the main control device, the step that the Bluetooth peripheral 303 sends the obtained plurality of pieces of link quality to the main control device may be omitted. To be specific, the Bluetooth peripheral 303 directly performs step S33: determining, based on the obtained plurality of pieces of link quality, a target electronic device that is to be switched to sending the Bluetooth audio data to the Bluetooth peripheral.

Step S33: The electronic device 301 determines, based on the obtained plurality of pieces of link quality, the target electronic device that is to be switched to sending the Bluetooth audio data to the Bluetooth peripheral.

After receiving the plurality of pieces of link quality sent by the Bluetooth peripheral 303, the electronic device 301 determines the target electronic device based on the received plurality of pieces of link quality. The target electronic device is an electronic device that directly communicates with the Bluetooth peripheral 303, namely, an electronic device that sends the Bluetooth audio data to the Bluetooth peripheral 303. As shown in FIG. 3, the target electronic device may be the electronic device 301 or the electronic device 302.

In some embodiments, the link quality may be measured by the RSSI, and a first RSSI threshold and a second RSSI threshold are set in the main control device. As described above, the main control device detects whether an RSSI corresponding to the current electronic device is less than the first RSSI threshold, and detects whether an RSSI corresponding to another electronic device is greater than the second RSSI threshold. If the RSSI corresponding to the current electronic device is less than the first RSSI threshold, and the RSSI corresponding to the another electronic device is greater than the second RSSI threshold, the another electronic device is determined as the target electronic device. If the RSSI corresponding to the current electronic device is greater than or equal to the first RSSI threshold, and/or the RSSI corresponding to the another electronic device is less than or equal to the second RSSI threshold, the current electronic device is determined as the target electronic device.

As shown in FIG. 4A, the mobile phone A is the current electronic device, the mobile phone B, the tablet computer, the PC, or the like is the another electronic device, the Bluetooth peripheral is earbuds, the first RSSI threshold is x decibels (dB), and the second RSSI threshold is y dB. If an RSSI corresponding to the mobile phone A is less than x, and an RSSI corresponding to the another electronic device such as the mobile phone B, the tablet computer, or the PC is greater than y, the another electronic device such as the mobile phone B, the tablet computer, or the PC is used as the target electronic device. If an RSSI corresponding to the mobile phone A is not less than x, and an RSSI corresponding to the another electronic device such as the mobile phone B, the tablet computer, or the PC is not greater than y, the mobile phone A is determined as the target electronic device.

In some embodiments, the link quality may be measured by a distance. The main control device detects whether a distance corresponding to the current electronic device is greater than a first distance threshold, and detects whether a distance corresponding to the another electronic device is less than a second distance threshold. If the distance corresponding to the current electronic device is greater than the first distance threshold, and the distance corresponding to the another electronic device is less than the second distance threshold, the another electronic device is determined as the target electronic device. If the distance corresponding to the current electronic device is less than or equal to the first distance threshold, and/or the distance corresponding to the another electronic device is greater than or equal to the second distance threshold, the current electronic device is determined as the target electronic device.

As shown in FIG. 4B, the mobile phone A is the current electronic device, the mobile phone B, the tablet computer, the PC, or the like is the another electronic device, and the Bluetooth peripheral is the earbuds. The first distance threshold is x centimeters (cm), and the second distance threshold is y cm. If a distance corresponding to the mobile phone A is greater than x, and a distance corresponding to the another electronic device such as the mobile phone B, the tablet computer, or the PC is less than y, the another electronic device such as the mobile phone B, the tablet computer, or the PC is used as the target electronic device. If a distance corresponding to the mobile phone A is not greater than x, and a distance corresponding to the another electronic device such as the mobile phone B, the tablet computer, or the PC is not less than y, the mobile phone A is determined as the target electronic device.

Step S34: If the target electronic device is different from the current electronic device, the electronic device 301 sends a first notification to the Bluetooth peripheral 303, where the first notification indicates the Bluetooth peripheral 303 to obtain the Bluetooth audio data from the target electronic device.

If the target electronic device is the electronic device 301 and the current electronic device is the electronic device 302, the target electronic device is different from the current electronic device, and the electronic device 301 sends the first notification to the Bluetooth peripheral 303. The first notification indicates the Bluetooth peripheral 303 to obtain the Bluetooth audio data from the target electronic device, namely, to obtain the Bluetooth audio data from the electronic device 301.

If the target electronic device is the electronic device 302, and the current electronic device is the electronic device 301, the target electronic device is different from the current electronic device, and the electronic device 301 sends the first notification to the Bluetooth peripheral 303. The first notification indicates the Bluetooth peripheral 303 to obtain the Bluetooth audio data from the target electronic device, namely, to obtain the Bluetooth audio data from the electronic device 302.

In some embodiments, before sending the first notification to the Bluetooth peripheral 303, the electronic device 301 may further detect whether switching of an electronic device that transmits the Bluetooth audio data to the Bluetooth peripheral 303 occurs within preset duration before a current time point. If the switching of the electronic device that transmits the Bluetooth audio data to the Bluetooth peripheral 303 does not occur within the preset duration before the current time point, for example, when it is always the electronic device 301 that transmits the Bluetooth audio data to the Bluetooth peripheral 303 within the preset duration before the current time point, the electronic device 301 sends the first notification to the Bluetooth peripheral 303. If the switching of the electronic device that transmits the Bluetooth audio data to the Bluetooth peripheral 303 occurs within the preset duration before the current time point, the electronic device 301 no longer sends the first notification to the Bluetooth peripheral 303, to prevent occurrence of ping pong effect.

Step S35: The Bluetooth peripheral 303 sends a second notification to the electronic device 301, where the second notification indicates that the Bluetooth peripheral 303 completes preparation for obtaining the Bluetooth audio data from the target electronic device.

The electronic device 301 is the main control device. After receiving the first notification and completing preparation for obtaining the Bluetooth audio data from the target electronic device, the Bluetooth peripheral 303 sends the second notification to the main control device, that is, sends the second notification to the electronic device 301.

In some embodiments, preparation for obtaining the Bluetooth audio data from the target electronic device may be establishing a connection between the Bluetooth peripheral 303 and the target electronic device. To be specific, after receiving the first notification, the Bluetooth peripheral 303 establishes a connection to the target electronic device indicated by the first notification, and sends the second notification to the electronic device 301 after the connection is established.

In some embodiments, preparation for obtaining the Bluetooth audio data from the target electronic device may be converting a virtual connection between the Bluetooth peripheral 303 and the target electronic device into a physical connection. To be specific, the Bluetooth peripheral 303 supports a plurality of connections, for example, supports an asynchronous connection-less link (Asynchronous Connection-less Link, ACL) connection, and the Bluetooth peripheral 303 establishes a virtual connection to the current electronic device and a virtual connection to the target electronic device separately. After the Bluetooth peripheral 303 receives the first notification, the virtual connection between the Bluetooth peripheral 303 and the target electronic device indicated by the first notification is converted into a physical connection, and a physical connection between the Bluetooth peripheral 303 and the current electronic device is converted into a virtual connection. The second notification is sent to the electronic device 301 after conversion between the virtual connection and the physical conversion is completed. Subsequently, the Bluetooth peripheral 303 may receive the Bluetooth audio data through the physical connection between the Bluetooth peripheral 303 and the target electronic device. In this manner, audio switching may be smoother.

Step S36: The electronic device 301 sends a third notification to the electronic device 302, where the third notification indicates the electronic device 302 to forward the Bluetooth audio data to the Bluetooth peripheral 303 by using the target electronic device.

The electronic device 301 is the main control device, and the electronic device 302 is the source electronic device. The main control device, namely, the electronic device 301, receives the second notification, and sends the third notification to the source electronic device, namely, sends the third notification to the electronic device 302.

In this embodiment of this application, when the main control device is the source electronic device, the step that the main control device sends the third notification to the source electronic device may be omitted, that is, the source electronic device may directly perform step S37: forwarding the Bluetooth audio data to the Bluetooth peripheral by using the target electronic device.

Step S37: The electronic device 302 forwards the Bluetooth audio data to the Bluetooth peripheral 303 by using the target electronic device.

As described in the foregoing step S34, if the target electronic device is the electronic device 301, the electronic device 302 used as the source electronic device determines, based on the third notification, that the target electronic device is the electronic device 301, and further forwards the Bluetooth audio data to the Bluetooth peripheral 303 by using the electronic device 301. For example, the electronic device 302 forwards the Bluetooth audio data to the electronic device 301, and then the electronic device 301 forwards the Bluetooth audio data to the Bluetooth peripheral 303. Alternatively, the electronic device 302 sends address information such as an ID or a link of the Bluetooth audio data to the electronic device 301, and then the electronic device 301 accesses data of the address information by enabling an application (Application, APP) for playing the Bluetooth audio data, to obtain the Bluetooth audio data, and forwards the obtained Bluetooth audio data to the Bluetooth peripheral 303.

In this embodiment of this application, in an implementation in which the electronic device 302 sends the address information such as the ID or the link of the Bluetooth audio data to the electronic device 301, to enable the electronic device 301 to forward the Bluetooth audio data to the Bluetooth peripheral 303, an application for playing the Bluetooth audio data is to be installed on the electronic device 302 and the electronic device 301. In an audio data transmission manner shown in FIG. 5, a mobile phone A is a source electronic device, and a mobile phone B, a tablet computer, a PC, or the like is a target electronic device. The mobile phone A transmits the address information such as the ID or the link of the Bluetooth audio data to another electronic device such as the mobile phone B, the tablet computer, or the PC. After a same APP is enabled in the another electronic device such as the mobile phone B, the tablet computer, or the PC, the another electronic device such as the mobile phone B, the tablet computer, or the PC accesses the address information such as the ID or the link of the Bluetooth audio data to obtain the Bluetooth audio data and plays the Bluetooth audio data.

As described in the foregoing step S34, if the target electronic device is the electronic device 302, that is, the target electronic device is the source electronic device, the electronic device 302 used as the source electronic device determines, based on the third notification, that the target electronic device is the electronic device 302, and further sends the Bluetooth audio data to the Bluetooth peripheral 303.

The foregoing target electronic device may be understood as a relay device, to ensure that the Bluetooth audio data is accurately transmitted to the Bluetooth peripheral 303. In a complicated signal environment such as an indoor environment, a case in which a user has a plurality of devices, such as a mobile phone, a tablet computer, a PC, a smart refrigerator, a large screen, and local area Bluetooth module, occurs more frequently. These devices are respectively located in different positions in different rooms, and are authorized to be connected, such as a super terminal. In this case, these devices may be used as relay devices, to enable the user to obtain better continuous audio experience and improve user experience.

In some embodiments, the source electronic device may monitor link quality between the remote device and the source electronic device in real time. The link quality may be measured by an RSSI, or may be measured by a distance. When the link quality between the remote device and the source electronic device is less than the second preset link quality threshold, the remote device or the source electronic device may trigger relay device searching. To be specific, one or more relay devices that ensure communication quality between the remote device and the source electronic device are searched for in a network covering the remote device and the source electronic device. This enables the source electronic device to obtain the Bluetooth audio data from the remote device by using the one or more relay devices, and reduces packet loss and retransmission generated when the source electronic device obtains the Bluetooth audio data from the remote device. The relay device is any one of the plurality of electronic devices or a device including a Bluetooth module.

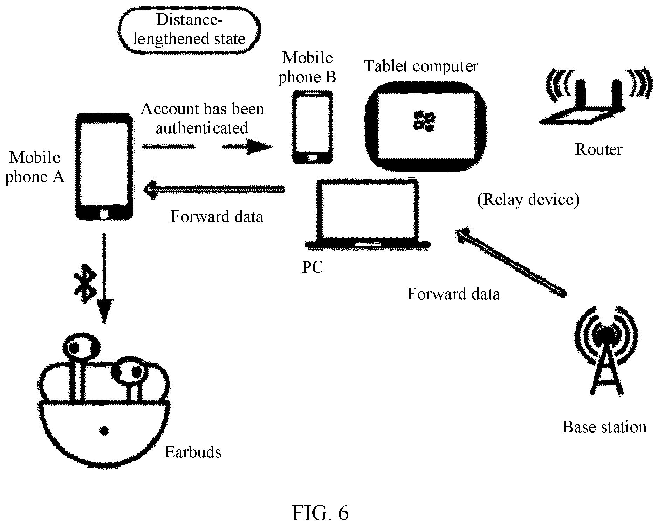

In an audio data transmission manner based on a relay device shown in FIG. 6, a plurality of electronic devices include a mobile phone A, a mobile phone B, a tablet computer, a PC, and the like. The mobile phone A, the mobile phone B, the tablet computer, the PC, and the like are connected through account authentication. The mobile phone A is a source electronic device, the mobile phone B, the tablet computer, the PC, a router, and the like are other electronic devices, a base station is a remote device, and a Bluetooth peripheral is earbuds. When the mobile phone A is at a position in a kitchen, a toilet, a basement, or the like with a poor signal, and electronic devices such as the mobile phone B, the tablet computer, the PC, and the router are at positions with a good Wi-Fi or cellular signal, link quality between the mobile phone A and the base station is lower. For example, the link quality between the mobile phone A and the base station is less than a second preset link quality threshold, link quality between the electronic devices such as the mobile phone B, the tablet computer, the PC, and the router and the base station is higher, and link quality between the electronic devices and the mobile phone A is higher. The mobile phone A obtains, from the electronic devices such as the mobile phone B, the tablet computer, the PC, and the router that are authorized to be connected, one or more electronic devices, used as relay devices, between which and the base station link quality is greater than a second preset link quality threshold and between which and the mobile phone A link quality is greater than the second preset link quality threshold. This enables the mobile phone A to obtain Bluetooth audio data from the base station by using the relay device.

In some embodiments, when obtaining the Bluetooth audio data from the source electronic device, a target electronic device may monitor link quality between the target electronic device and the source electronic device in real time. The link quality may be measured by an RSSI, or may be measured by a distance. When the link quality between the target electronic device and the source electronic device is less than a first preset link quality threshold, the target electronic device or the source electronic device may trigger relay device searching. To be specific, one or more relay devices that ensure communication quality between the target electronic device and the source electronic device are searched for in a network covering the target electronic device and the source electronic device. This enables the source electronic device to obtain the Bluetooth audio data from the remote device by using the one or more relay devices and reduces packet loss and retransmission generated when the source electronic device obtains the Bluetooth audio data from the remote device. The relay device is any one of the plurality of electronic devices or a device including a Bluetooth module.

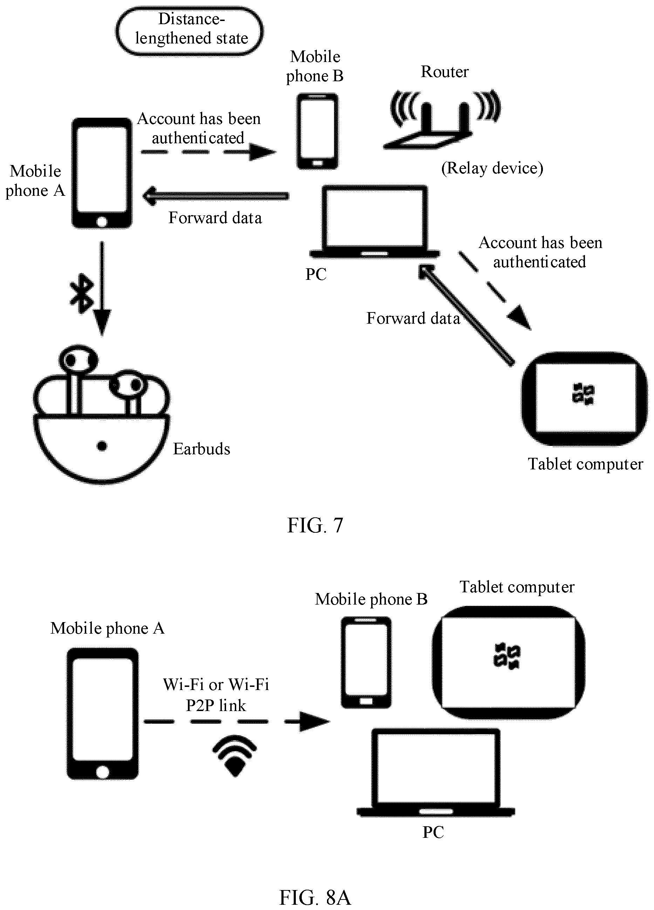

In an audio data transmission manner based on a relay device shown in FIG. 7, a plurality of electronic devices include a mobile phone A, a mobile phone B, a tablet computer, a PC, and the like. The mobile phone A, the mobile phone B, the tablet computer, the PC, and the like are connected through account authentication. The mobile phone A is a target electronic device, the tablet computer is a source electronic device, the mobile phone B, the PC, a router, and the like are other electronic devices, and a Bluetooth peripheral is earbuds. When the mobile phone A is at a position in a kitchen, a toilet, a basement, or the like with a poor signal, and electronic devices such as the mobile phone B, the PC, and the router are at positions with a good Wi-Fi or cellular signal, link quality between the mobile phone A and the tablet computer is lower. For example, the link quality between the mobile phone A and the tablet computer is less than a first preset link quality threshold. Link quality between the electronic devices such as the mobile phone B, the PC, and the router and the tablet computer is higher, and link quality between the electronic devices and the mobile phone A is higher. The mobile phone A obtains, from the electronic devices such as the mobile phone B, the PC, and the router that are authorized to be connected, one or more electronic devices that are used as relay devices and between which and the tablet computer link quality is greater than a first preset link quality threshold and between which and the mobile phone A link quality is greater than the first preset link quality threshold. This enables the mobile phone A to obtain Bluetooth audio data from the tablet computer by using the relay devices.

By using the relay devices, the user can obtain better continuous audio experience, and user experience can be improved.

In some embodiments, to improve data transmission quality and data transmission efficiency, a link may be established for every two of the plurality of electronic devices based on a distance between the two electronic devices. For example, when the distance between the two electronic devices is less than a preset distance, a Bluetooth link having relatively high data transmission quality and data transmission efficiency is established. When the distance between the two electronic devices is greater than or equal to a preset distance, a wireless local area network link having stable data transmission quality and data transmission efficiency is established. In an audio data transmission manner shown in FIG. 8A, a mobile phone A is a source electronic device, and a mobile phone B, a tablet computer, a PC, or the like is a target electronic device. The mobile phone A and other electronic devices such as the mobile phone B, the tablet computer, and the PC are in a same Wi-Fi network. The mobile phone A establishes a Wi-Fi link or Wi-Fi P2P link with the other electronic devices such as the mobile phone B, the tablet computer, and the PC, and transmits Bluetooth audio data through the Wi-Fi link or Wi-Fi P2P link.

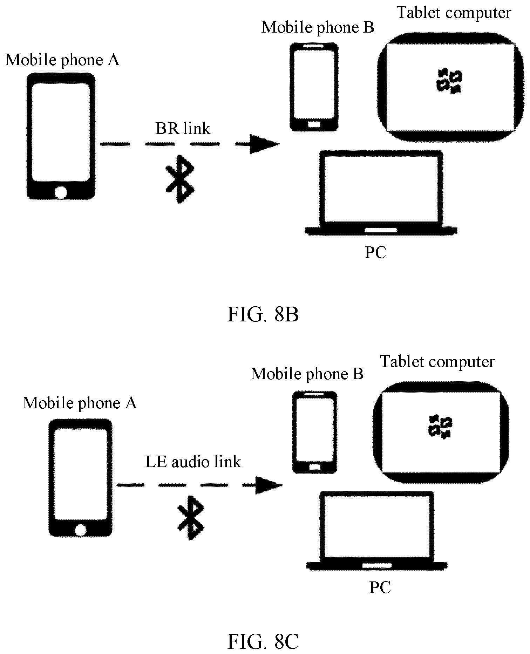

In an embodiment of this application, when a distance between two electronic devices is less than a preset distance, that is, when the two electronic devices are relatively close to each other, to improve data transmission quality and data transmission efficiency, a Bluetooth link may be established between the two electronic devices based on an obtained Bluetooth link encoding format. The Bluetooth link encoding format is a BR link encoding format, an LE audio link encoding format, or the like. In audio data transmission manners shown in FIG. 8B and FIG. 8C, a mobile phone A is a source electronic device, and a mobile phone B, a tablet computer, a PC, or the like is a target electronic device. The mobile phone A establishes a BR link or an LE audio link with other electronic devices such as the mobile phone B, the tablet computer, and the PC, and transmits Bluetooth audio data through the BR link or the LE audio link.

In an example, a Bluetooth link is established between the two electronic devices in a Bluetooth link encoding format supported by both the two electronic devices and a Bluetooth peripheral. For example, an LE audio link encoding format supported by both the two electronic devices and the Bluetooth peripheral. Then the LE audio link is established between the two electronic devices.

In another example, the Bluetooth link may be established between the two electronic devices in a Bluetooth link encoding format that has a lowest power consumption and that is supported by the two electronic devices. For example, an LE audio link encoding format and a BR link encoding format that are supported by the two electronic devices. A power consumption of the LE audio link is lower than a power consumption of the BR link. Therefore, the LE audio link is established between the two electronic devices.

In still another example, a Bluetooth link is established between the two electronic devices in a Bluetooth link encoding format that has a lowest delay and that is supported by the two electronic devices. For example, an LE audio link encoding format and a BR link encoding format that are supported by the two electronic devices. The BR link encoding format may be defined as null. To be specific, to-be-forwarded Bluetooth audio data is not re-encoded. In this case, a delay of the BR link is lower than a delay of the LE audio link, and the BR link is established between the two electronic devices.

In an embodiment of this application, the Bluetooth link may be alternatively established based on a communication requirement for the electronic device. For example, if an operation such as song switching or controlling a call is to be performed in a scenario in which a distance is lengthened, the LE audio link is established between the two electronic devices.

To ensure communication quality, when the BR link or the LE audio link is established, the following conditions are to be met: A distance between the two electronic devices is relatively short without shielding, and antenna performance of the two electronic devices is good.

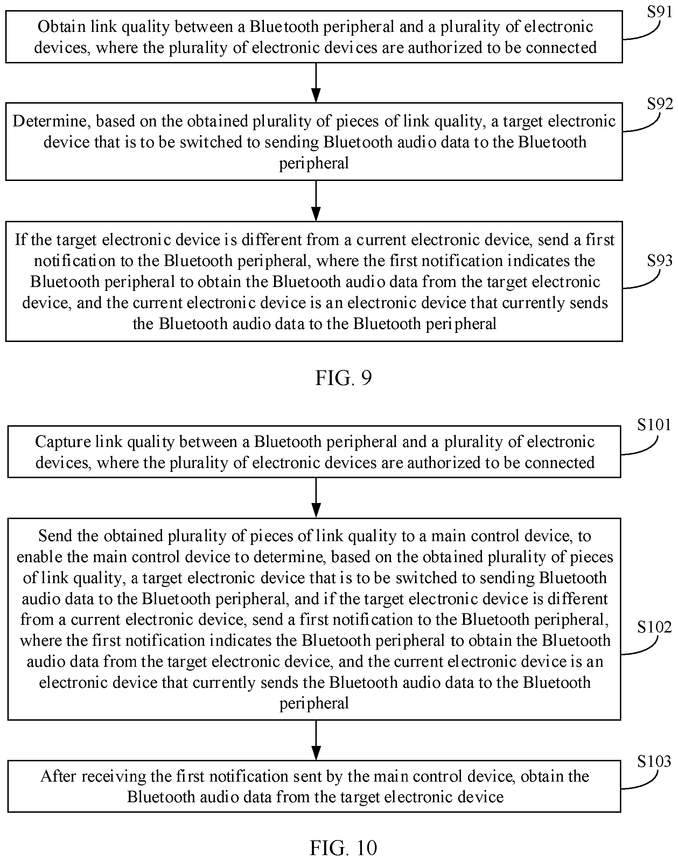

Corresponding to the foregoing data processing method, an embodiment of this application further provides a data processing method. As shown in FIG. 9, the method is applied to a main control device. The method includes the following steps.

Step S91: Obtain link quality between a Bluetooth peripheral and a plurality of electronic devices, where the plurality of electronic devices are authorized to be connected.

Step S92: Determine, based on the obtained plurality of pieces of link quality, a target electronic device that is to be switched to sending Bluetooth audio data to the Bluetooth peripheral.

Step S93: If the target electronic device is different from a current electronic device, send a first notification to the Bluetooth peripheral, where the first notification indicates the Bluetooth peripheral to obtain the Bluetooth audio data from the target electronic device, and the current electronic device is an electronic device that currently sends the Bluetooth audio data to the Bluetooth peripheral.

In the data processing method in this embodiment of this application, the main control device obtains the link quality between the Bluetooth peripheral and the plurality of electronic devices, and based on the obtained plurality of pieces of link quality, the main control device may determine an optimal electronic device, namely, the target electronic device, that communicates with the Bluetooth peripheral. If the target electronic device is different from the current electronic device, it indicates that the Bluetooth peripheral is in a scenario in which a distance is lengthened relative to the current electronic device, and the main control device notifies the Bluetooth peripheral of being switched to obtaining the Bluetooth audio data from the target electronic device having relatively good link quality. This resolves a problem in which the Bluetooth peripheral and the current electronic device are in a distance-lengthened state and a distance between the Bluetooth peripheral and the current electronic device is increased, causing quality of a Bluetooth signal to be poor, and further causing packet loss and retransmission of the Bluetooth audio data, and leading to freezing of the Bluetooth audio data. Therefore, smoothness of the Bluetooth audio data is increased, and user experience is improved.

In some embodiments, step S91 may be: obtaining RSSIs between the Bluetooth peripheral and the plurality of electronic devices.

Step S92 may be: detecting whether an RSSI corresponding to the current electronic device is less than a first RSSI threshold, and detecting whether an RSSI corresponding to another electronic device is greater than a second RSSI threshold, where the current electronic device is an electronic device that currently sends the Bluetooth audio data to the Bluetooth peripheral, and the another electronic device is an electronic device, except the current electronic device, of the plurality of electronic devices. If the RSSI corresponding to the current electronic device is less than the first RSSI threshold, and the RSSI corresponding to the another electronic device is greater than the second RSSI threshold, the another electronic device is determined as the target electronic device. If the RSSI corresponding to the current electronic device is greater than or equal to the first RSSI threshold, and/or the RSSI corresponding to the another electronic device is less than or equal to the second RSSI threshold, the current electronic device is determined as the target electronic device.

In some embodiments, step S91 may be: obtaining distances between the Bluetooth peripheral and the plurality of electronic devices.

Step S92 may be: detecting whether a distance corresponding to the current electronic device is greater than a first distance threshold, and detecting whether a distance corresponding to another electronic device is less than a second distance threshold, where the current electronic device is an electronic device that currently sends the Bluetooth audio data to the Bluetooth peripheral, and the another electronic device is an electronic device, except the current electronic device, of the plurality of electronic devices. If the distance corresponding to the current electronic device is greater than the first distance threshold, and the distance corresponding to the another electronic device is less than the second distance threshold, the another electronic device is determined as the target electronic device. If the distance corresponding to the current electronic device is less than or equal to the first distance threshold, and/or the distance corresponding to the another electronic device is greater than or equal to the second distance threshold, the current electronic device is determined as the target electronic device.

In some embodiments, step S91 may be: measuring distances between the Bluetooth peripheral and the plurality of electronic devices by using a Bluetooth low energy ranging algorithm or an indoor positioning algorithm.

In some embodiments, before the step of sending a first notification to the Bluetooth peripheral, the data processing method may further include: detecting whether switching of an electronic device that transmits the Bluetooth audio data to the Bluetooth peripheral occurs within preset duration before a current time point; and if the switching of the electronic device that transmits the Bluetooth audio data to the Bluetooth peripheral does not occur within the preset duration before the current time point, performing the step of sending a first notification to the Bluetooth peripheral; or if the switching of the electronic device that transmits the Bluetooth audio data to the Bluetooth peripheral occurs within the preset duration before the current time point, skipping performing the step of sending a first notification to the Bluetooth peripheral.

In some embodiments, the data processing method may further include: receiving a second notification sent by the Bluetooth peripheral, where the second notification indicates that the Bluetooth peripheral completes preparation for obtaining the Bluetooth audio data from the target electronic device; and sending a third notification to a source electronic device, where the third notification indicates the source electronic device to forward the Bluetooth audio data to the Bluetooth peripheral by using the target electronic device, and the source electronic device is an electronic device that is of the plurality of electronic devices and that obtains the Bluetooth audio data from a remote device.

In some embodiments, the main control device may be the Bluetooth peripheral or any one of the plurality of electronic devices.

Corresponding to the foregoing data processing method, an embodiment of this application further provides a data processing method. As shown in FIG. 10, the method is applied to a Bluetooth peripheral. The method includes the following steps.

Step S101: Capture link quality between the Bluetooth peripheral and a plurality of electronic devices, where the plurality of electronic devices are authorized to be connected.

Step S102: Send the obtained plurality of pieces of link quality to a main control device, to enable the main control device to determine, based on the obtained plurality of pieces of link quality, a target electronic device that is to be switched to sending Bluetooth audio data to the Bluetooth peripheral, and if the target electronic device is different from a current electronic device, send a first notification to the Bluetooth peripheral, where the first notification indicates the Bluetooth peripheral to obtain the Bluetooth audio data from the target electronic device, and the current electronic device is an electronic device that currently sends the Bluetooth audio data to the Bluetooth peripheral.

Step S103: After receiving the first notification sent by the main control device, obtain the Bluetooth audio data from the target electronic device.

In the data processing method in this embodiment of this application, the main control device obtains the link quality between the Bluetooth peripheral and the plurality of electronic devices, and based on the obtained plurality of pieces of link quality, the main control device may determine an optimal electronic device, namely, the target electronic device, that communicates with the Bluetooth peripheral. If the target electronic device is different from the current electronic device, it indicates that the Bluetooth peripheral is in a scenario in which a distance is lengthened relative to the current electronic device, and the main control device notifies the Bluetooth peripheral of being switched to obtaining the Bluetooth audio data from the target electronic device having relatively good link quality. This resolves a problem in which the Bluetooth peripheral and the current electronic device are in a distance-lengthened state and a distance between the Bluetooth peripheral and the current electronic device is increased, causing quality of a Bluetooth signal to be poor, and further causing packet loss and retransmission of the Bluetooth audio data, and leading to freezing of the Bluetooth audio data. Therefore, smoothness of the Bluetooth audio data is increased, and user experience is improved.

In some embodiments, the Bluetooth peripheral establishes a connection to the current electronic device and a connection to the target electronic device separately. In this case, in step S103, the obtaining the Bluetooth audio data from the target electronic device may be: converting a connection between the Bluetooth peripheral and the target electronic device into a physical connection, converting a connection between the Bluetooth peripheral and the current electronic device into a virtual connection; and receiving, through the physical connection between the Bluetooth peripheral and the target electronic device, the Bluetooth audio data sent by the target electronic device.

In some embodiments, after receiving the first notification sent by the main control device, the foregoing data processing method may further include: sending a second notification to the main control device, where the second notification indicates that the Bluetooth peripheral completes preparation for obtaining the Bluetooth audio data from the target electronic device.

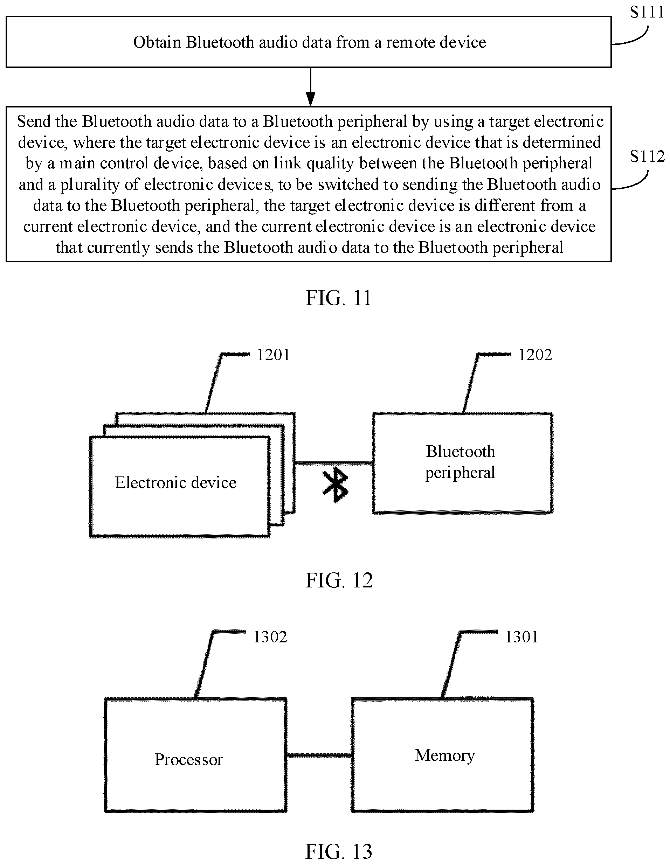

Corresponding to the foregoing data processing method, an embodiment of this application further provides a data processing method. As shown in FIG. 11, the method is applied to a source electronic device of a plurality of electronic devices. The plurality of electronic devices are authorized to be connected. The source electronic device is an electronic device that is of the plurality of electronic devices and that obtains Bluetooth audio data from a remote device. The method includes the following steps.

Step S111: Obtain the Bluetooth audio data from the remote device.

Step S112: Send the Bluetooth audio data to a Bluetooth peripheral by using a target electronic device, where the target electronic device is an electronic device that is determined by a main control device, based on link quality between the Bluetooth peripheral and the plurality of electronic devices, to be switched to sending the Bluetooth audio data to the Bluetooth peripheral, the target electronic device is different from a current electronic device, and the current electronic device is an electronic device that currently sends the Bluetooth audio data to the Bluetooth peripheral.

In the data processing method in this embodiment of this application, the main control device obtains the link quality between the Bluetooth peripheral and the plurality of electronic devices, and based on the obtained plurality of pieces of link quality, the main control device may determine an optimal electronic device, namely, the target electronic device, that communicates with the Bluetooth peripheral. If the target electronic device is different from the current electronic device, it indicates that the Bluetooth peripheral is in a scenario in which a distance is lengthened relative to the current electronic device, and the main control device notifies the Bluetooth peripheral of being switched to obtaining the Bluetooth audio data from the target electronic device having relatively good link quality. This resolves a problem in which the Bluetooth peripheral and the current electronic device are in a distance-lengthened state and a distance between the Bluetooth peripheral and the current electronic device is increased, causing quality of a Bluetooth signal to be poor, and further causing packet loss and retransmission of the Bluetooth audio data, and leading to freezing of the Bluetooth audio data. Therefore, smoothness of the Bluetooth audio data is increased, and user experience is improved.

In some embodiments, step S112 may be: receiving a third notification sent by a main control device, where the third notification indicates the source electronic device to forward the Bluetooth audio data to the Bluetooth peripheral by using the target electronic device; and sending the Bluetooth audio data to the Bluetooth peripheral by using the target electronic device indicated by the third notification.

In some embodiments, step S 112 may be: when the target electronic device is the source electronic device, sending the Bluetooth audio data to the Bluetooth peripheral; or when the target electronic device is another electronic device, indicating the another electronic device to send the Bluetooth audio data to the Bluetooth peripheral, where the another electronic device is an electronic device, except the source electronic device, of the plurality of electronic devices.

In some embodiments, the step of indicating the another electronic device to send the Bluetooth audio data to the Bluetooth peripheral may be: sending the Bluetooth audio data to the another electronic device, to enable the another electronic device to forward the Bluetooth audio data to the Bluetooth peripheral.

In some embodiments, an application for playing the Bluetooth audio data is installed on the source electronic device and the another electronic device. In this case, the step of indicating the another electronic device to send the Bluetooth audio data to the Bluetooth peripheral may be: sending address information of the Bluetooth audio data to the another electronic device, where the address information is an identifier or a link of the Bluetooth audio data in the application, to enable the another electronic device to obtain the Bluetooth audio data corresponding to the address information and send the obtained Bluetooth audio data to the Bluetooth peripheral.

In some embodiments, the step of indicating the another electronic device to send the Bluetooth audio data to the Bluetooth peripheral may be: when link quality between the another electronic device and the source electronic device is less than a first preset link quality threshold, indicating, by using a relay device, the another electronic device to send the Bluetooth audio data to the Bluetooth peripheral, where the relay device is any one of the plurality of electronic devices or a device including a Bluetooth module.

In some embodiments, step S111 may be: when link quality between the remote device and the source electronic device is less than a second preset link quality threshold, obtaining, by using a relay device, the Bluetooth audio data from the remote device, where the relay device is any one of the plurality of electronic devices or a device including a Bluetooth module.

In some embodiments, the data processing method may further include: when a distance between any two of the plurality of electronic devices is less than a preset distance, obtaining, by the any two electronic devices, a Bluetooth link encoding format separately supported by the any two electronic devices and the Bluetooth peripheral; and establishing a Bluetooth link between the any two electronic devices based on the obtained Bluetooth link encoding format, where the any two electronic devices are communicated through the Bluetooth link.

In some embodiments, the step of establishing a Bluetooth link between any two electronic devices based on the obtained Bluetooth link encoding format may be: establishing the Bluetooth link between the any two electronic devices by using the Bluetooth link encoding format supported by the any two electronic devices and the Bluetooth peripheral.

In some embodiments, the Bluetooth link encoding format is a BR link encoding format or an LE audio link encoding format.

In some embodiments, the BR link encoding format is null.

In some embodiments, the data processing method may further include: when a distance between any two of the plurality of electronic devices is greater than or equal to a preset distance, if the any two electronic devices are in a same wireless local area network, establishing a wireless local area network link between the any two electronic devices.

Corresponding to the foregoing data processing method, an embodiment of this application further provides a data processing system. As shown in FIG. 12, the system may include a plurality of electronic devices 1201 and a Bluetooth peripheral 1202. The plurality of electronic devices 1201 are authorized to be connected. The Bluetooth peripheral 1202 or any one of the plurality of electronic devices 1201 is used as a main control device.

The main control device is configured to perform any step in the method in the foregoing embodiment shown in FIG. 9.

The Bluetooth peripheral is configured to perform any step in the method in the foregoing embodiment shown in FIG. 10.

A source electronic device of the plurality of electronic devices is configured to perform any step in the method in the foregoing embodiment shown in FIG. 11.

Corresponding to the foregoing data processing method, an embodiment of this application further provides an electronic device. As shown in FIG. 13, the electronic device includes:
a memory 1301, configured to store instructions executed by one or more processors 1302 of the device; and
a processor 1302, configured to execute the instructions, to enable the electronic device to perform any step in the method in the foregoing embodiment shown in FIG. 9 or FIG. 11.

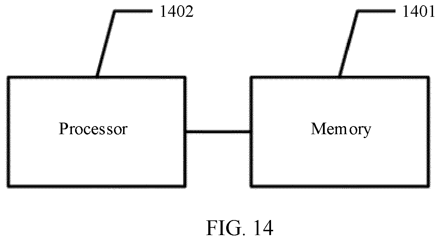

Corresponding to the foregoing data processing method, an embodiment of this application further provides a Bluetooth peripheral. As shown in FIG. 14, the Bluetooth peripheral includes:
a memory 1401, configured to store instructions executed by one or more processors 1402 of the device; and
a processor 1402, configured to execute the instructions, to enable the Bluetooth peripheral to perform any step in the method in the foregoing embodiment shown in FIG. 9 or FIG. 10.

The processor may be a general-purpose processor, including a central processing unit (Central Processing Unit, CPU), a network processor (Network Processor, NP), and the like; or may alternatively be a digital signal processor (Digital Signal Processor, DSP), an application specific integrated circuit (Application Specific Integrated Circuit, ASIC), a field-programmable gate array (Field-Programmable Gate Array, FPGA), another programmable logic device, a discrete gate, a transistor logic device, or a discrete hardware component.

The memory may include a random access memory (Random Access Memory, RAM), or may alternatively include a non-volatile memory (Non-Volatile Memory, NVM), for example, at least one disk memory. Optionally, the memory may alternatively be at least one storage apparatus located far away from the foregoing processor.

Corresponding to the foregoing data processing method, an embodiment of this application further provides a computer readable storage medium. The computer readable storage medium stores a computer program. When the computer program is run by an electronic device, the electronic device is enabled to perform any step in the method in the foregoing embodiment shown in FIG. 9 or FIG. 11, or when the computer program is run by a Bluetooth peripheral, the Bluetooth peripheral is enabled to perform any step in the method in the foregoing embodiment shown in FIG. 9 or FIG. 10.

Corresponding to the foregoing data processing method, in still another embodiment provided in this application, a computer program product including instructions is further provided. When the computer program product is run on an electronic device, the electronic device is enabled to perform any step in the method in the foregoing embodiment shown in FIG. 9 or FIG. 11. When the computer program product is run on the electronic device, the electronic device is enabled to perform any step in the method in the foregoing embodiment shown in FIG. 9 or FIG. 10.

Embodiments of a mechanism disclosed in this application may be implemented in hardware, software, firmware, or a combination of these implementation methods. Embodiments of this application may be implemented by using a computer program or program code that is executed on a programmable system, and the programmable system includes at least one processor, a storage system (including volatile and non-volatile memories and/or a storage element), at least one input device, and at least one output device.

The program code may be used for inputting instructions, to perform functions described in this application and generate output information. The output information may be used in one or more output devices in a known manner. For a purpose of this application, a processing system includes any system that has a processor such as a digital signal processor (Digital Signal Processor, DSP), a micro-controller, an application specific integrated circuit (Application Specific Integrated Circuit, ASIC), or a microprocessor.

The program code may be implemented in a high-level procedural language or an object-oriented programming language, to communicate with the processing system. The program code may be alternatively implemented in an assembly language or a machine language when needed. Actually, the mechanisms described in this application are not limited to a scope of any particular programming language. In any case, the language may be a compiled language or an interpreted language.

In some cases, the disclosed embodiments may be implemented by hardware, firmware, software, or any combination thereof. The disclosed embodiments may alternatively be implemented as instructions that are carried or stored on one or more transient or non-transient machine-readable (for example, computer-readable) storage media and that may be read and executed by one or more processors. For example, the instructions may be distributed through a network or other computer-readable media. Therefore, the machine-readable medium may include any mechanism used for storing or transmitting information in a machine (for example, computer) readable form, including but not limited to a floppy disk, an optical disc, an optical disk, a compact disc read-only memory (Compact Disc Read Only Memory, CD-ROMs), a magnetic optical disc, a read-only memory (Read Only Memory, ROM), a random access memory (RAM), an erasable programmable read only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory used for transmitting information (such as a carrier, an infrared signal, and a digital signal) by using electricity, light, sound, or propagation signals in other forms over the Internet. Therefore, the machine-readable medium includes any type of a machine-readable medium suitable for storing or transmitting an electronic instruction or information in the machine (for example, computer) readable form.

In the accompanying drawings, some structural or method features may be shown in a particular arrangement and/or order. However, it should be understood that such particular arrangement and/or order may not be needed. In some embodiments, these features may be arranged in a manner and/or order different from that shown in the accompanying drawings of the specification. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that in examples and the specification of this patent, relational terms such as first and second are only used to distinguish one entity or operation from another entity or operation, and do not necessarily require or imply that there is any such actual relationship or sequence between these entities or operations. Moreover, the terms "include", "comprise", or any other variants thereof are intended to cover a non-exclusive inclusion, so that a process, a method, an article, or a device that includes a list of elements not only includes those elements but also includes other elements that are not listed, or further includes elements inherent to such process, method, article, or a device. In absence of more constraints, an element defined by the statement "includes a..." does not preclude existence of an identical element in the process, method, article, or device that includes the element.

Although the invention has been explained in relation to its preferred embodiment(s) as mentioned above, it is to be understood that many other possible modifications and variations can be made without departing from the scope of the present invention, which is defined by the claims.

## Claims

1. A data processing method, wherein the method is applied to a main control device (301) and comprises:
obtaining (S91) link quality between a Bluetooth peripheral (303) and a plurality of electronic devices, wherein the plurality of electronic devices are authorized to be connected;
determining (S92), based on the obtained plurality of pieces of link quality, a target electronic device (302) that is to be switched to sending Bluetooth audio data to the Bluetooth peripheral; the target electronic device is any electronic device among the plurality of electronic devices, and
if the target electronic device is different from a current electronic device, sending (S93) a first notification to the Bluetooth peripheral, wherein the first notification indicates the Bluetooth peripheral to obtain the Bluetooth audio data from the target electronic device, and the current electronic device is an electronic device that currently sends the Bluetooth audio data to the Bluetooth peripheral;
wherein the method further comprises:
receiving a second notification sent by the Bluetooth peripheral, wherein the second notification indicates that the Bluetooth peripheral completes preparation for obtaining the Bluetooth audio data from the target electronic device; and
sending a third notification to a source electronic device, wherein the third notification indicates the source electronic device to forward the Bluetooth audio data to the Bluetooth peripheral by using the target electronic device, and the source electronic device is an electronic device that is of the plurality of electronic devices and that obtains the Bluetooth audio data from a remote device;
**characterized in that**, before the step of sending a first notification to the Bluetooth peripheral, the method further comprises:
detecting whether switching of an electronic device that transmits the Bluetooth audio data to the Bluetooth peripheral occurs within a preset duration before a current time point; and if the switching of the electronic device that transmits the Bluetooth audio data to the Bluetooth peripheral does not occur within the preset duration before the current time point, performing the step of sending a first notification to the Bluetooth peripheral; or if the switching of the electronic device that transmits the Bluetooth audio data to the Bluetooth peripheral occurs within the preset duration before the current time point, skipping performing the step of sending a first notification to the Bluetooth peripheral.

2. The method according to claim 1, wherein the obtaining link quality between a Bluetooth peripheral and a plurality of electronic devices comprises: obtaining received signal strength indicators, RSSIs, between the Bluetooth peripheral and the plurality of electronic devices; and
the step of determining, based on the obtained plurality of pieces of link quality, a target electronic device that is to be switched to sending Bluetooth audio data to the Bluetooth peripheral comprises:
detecting whether an RSSI corresponding to the current electronic device is less than a first RSSI threshold, and detecting whether an RSSI corresponding to another electronic device is greater than a second RSSI threshold, wherein the another electronic device is an electronic device, except the current electronic device, of the plurality of electronic devices; and
if the RSSI corresponding to the current electronic device is less than the first RSSI threshold, and the RSSI corresponding to the another electronic device is greater than the second RSSI threshold, determining the another electronic device as the target electronic device; or
if the RSSI corresponding to the current electronic device is greater than or equal to the first RSSI threshold, and/or the RSSI corresponding to the another electronic device is less than or equal to the second RSSI threshold, determining the current electronic device as the target electronic device.

3. The method according to claim 1, wherein the obtaining link quality between a Bluetooth peripheral and a plurality of electronic devices comprises: obtaining distances between the Bluetooth peripheral and the plurality of electronic devices; and
the step of determining, based on the obtained plurality of pieces of link quality, a target electronic device that is to be switched to sending Bluetooth audio data to the Bluetooth peripheral comprises:
detecting whether a distance corresponding to the current electronic device is greater than a first distance threshold, and detecting whether a distance corresponding to another electronic device is less than a second distance threshold, wherein the another electronic device is an electronic device, except the current electronic device, of the plurality of electronic devices; and
if the distance corresponding to the current electronic device is greater than the first distance threshold, and the distance corresponding to the another electronic device is less than the second distance threshold, determining the another electronic device as the target electronic device; or
if the distance corresponding to the current electronic device is less than or equal to the first distance threshold, and/or the distance corresponding to the another electronic device is greater than or equal to the second distance threshold, determining that the current electronic device is the target electronic device.

4. The method according to claim 3, wherein the step of obtaining distances between the Bluetooth peripheral and the plurality of electronic devices comprises: measuring distances between the Bluetooth peripheral and the plurality of electronic devices by using a Bluetooth low energy ranging algorithm or an indoor positioning algorithm.

5. A data processing method, applied to a source electronic device of a plurality of electronic devices, wherein the plurality of electronic devices are authorized to be connected, the source electronic device is an electronic device that is of the plurality of electronic devices and that obtains Bluetooth audio data from a remote device, and the method comprises:
obtaining (S111) the Bluetooth audio data from the remote device; and
sending (S 112) the Bluetooth audio data to a Bluetooth peripheral by using a target electronic device, wherein the target electronic device is an electronic device that is determined by a main control device using the method of claim 1, based on link quality between the Bluetooth peripheral and the plurality of electronic devices, to be switched to sending the Bluetooth audio data to the Bluetooth peripheral, the target electronic device is different from a current electronic device, and the current electronic device is an electronic device that currently sends the Bluetooth audio data to the Bluetooth peripheral; the target electronic device is any electronic device among the plurality of electronic devices;
wherein the step of sending the Bluetooth audio data to a Bluetooth peripheral by using the target electronic device comprises:
receiving a third notification sent by the main control device, wherein the third notification indicates the source electronic device to forward the Bluetooth audio data to the Bluetooth peripheral by using the target electronic device; and
sending the Bluetooth audio data to the Bluetooth peripheral by using the target electronic device indicated by the third notification;
the third notification is a notification sent by the main control device after receiving the second notification sent by the Bluetooth peripheral, wherein the second notification indicates that the Bluetooth peripheral completes preparation for obtaining the Bluetooth audio data from the target electronic device.

6. The method according to claim 5, wherein the step of sending the Bluetooth audio data to a Bluetooth peripheral by using a target electronic device comprises:
when the target electronic device is the source electronic device, sending the Bluetooth audio data to the Bluetooth peripheral; or
when the target electronic device is another electronic device, indicating the another electronic device to send the Bluetooth audio data to the Bluetooth peripheral, wherein the another electronic device is an electronic device, except the source electronic device, of the plurality of electronic devices.

7. The method according to claim 6, wherein the step of indicating the another electronic device to send the Bluetooth audio data to the Bluetooth peripheral comprises:
sending the Bluetooth audio data to the another electronic device, to enable the another electronic device to forward the Bluetooth audio data to the Bluetooth peripheral.

8. The method according to claim 6, wherein an application for playing the Bluetooth audio data is installed on the source electronic device and the another electronic device; and
the step of indicating the another electronic device to send the Bluetooth audio data to the Bluetooth peripheral comprises:
sending address information of the Bluetooth audio data to the another electronic device, wherein the address information is an identifier or a link of the Bluetooth audio data in the application, to enable the another electronic device to obtain the Bluetooth audio data corresponding to the address information and send the obtained Bluetooth audio data to the Bluetooth peripheral.

9. The method according to claim 6, wherein the step of indicating the another electronic device to send the Bluetooth audio data to the Bluetooth peripheral comprises:
when link quality between the another electronic device and the source electronic device is less than a first preset link quality threshold, indicating, by using a relay device, the another electronic device to send the Bluetooth audio data to the Bluetooth peripheral, wherein the relay device is any one of the plurality of electronic devices or a device comprising a Bluetooth module.

10. The method according to claim 5, wherein the step of obtaining the Bluetooth audio data from the remote device comprises:
when link quality between the remote device and the source electronic device is less than a second preset link quality threshold, obtaining, by using a relay device, the Bluetooth audio data from the remote device, wherein the relay device is any one of the plurality of electronic devices or a device comprising a Bluetooth module.

11. The method according to claim 5, wherein the method further comprises:
when a distance between any two of the plurality of electronic devices is less than a preset distance, obtaining, by the any two electronic devices, a Bluetooth link encoding format separately supported by the any two electronic devices and the Bluetooth peripheral; and establishing a Bluetooth link between the any two electronic devices based on the obtained Bluetooth link encoding format, wherein the any two electronic devices are communicated through the Bluetooth link.

12. The method according to claim 11, wherein the step of establishing a Bluetooth link between the any two electronic devices based on the obtained Bluetooth link encoding format comprises: establishing the Bluetooth link between the any two electronic devices in a Bluetooth link encoding format supported by both the any two electronic devices and the Bluetooth peripheral.

13. A data processing system, wherein the system comprises a plurality of electronic devices (1201) and a Bluetooth peripheral (1202), the plurality of electronic devices are authorized to be connected, and the Bluetooth peripheral or any one of the plurality of electronic devices is used as a main control device;
the main control device is configured to perform the method according to any one of claims 1 to 4; and
a source electronic device of the plurality of electronic devices is configured to perform the method according to any one of claims 5 to 12.

14. An electronic device, comprising:
a memory (1301), configured to store instructions executed by one or more processors of the device; and
a processor (1302), configured to perform the instructions, to enable the electronic device to perform the method according to any one of claims 1 to 4 or claims 5 to 12.

## Patentansprüche

1. Ein Datenverarbeitungsverfahren, wobei das Verfahren auf ein Hauptsteuergerät (301) angewendet wird und Folgendes umfasst:
Erhalten (S91) der Verbindungsqualität zwischen einem Bluetooth-Peripheriegerät (303) und einer Vielzahl von elektronischen Geräten, wobei die Vielzahl von elektronischen Geräten zur Verbindung autorisiert sind;
Bestimmen (S92), basierend auf der erhaltenen Vielzahl von Verbindungsqualitäten, ein Ziel-Elektronikgerät (302), das auf das Senden von Bluetooth-Audiodaten an das Bluetooth-Peripheriegerät umgeschaltet werden soll; das Ziel-Elektronikgerät ist ein beliebiges Elektronikgerät unter den mehreren Elektronikgeräten, und
Wenn das Ziel-Elektronikgerät von einem aktuellen Elektronikgerät abweicht, wird eine erste Benachrichtigung an das Bluetooth-Peripheriegerät gesendet (S93), wobei die erste Benachrichtigung das Bluetooth-Peripheriegerät anweist, die Bluetooth-Audiodaten vom Ziel-Elektronikgerät zu erhalten, und das aktuelle Elektronikgerät ist ein Elektronikgerät, das derzeit die Bluetooth-Audiodaten an das Bluetooth-Peripheriegerät sendet;
wobei das Verfahren ferner umfasst:
Empfangen einer zweiten Benachrichtigung, die vom Bluetooth-Peripheriegerät gesendet wird, wobei die zweite Benachrichtigung anzeigt, dass das Bluetooth-Peripheriegerät die Vorbereitung zum Abrufen der Bluetooth-Audiodaten vom Zielgerät abgeschlossen hat; und
Senden einer dritten Benachrichtigung an ein Quell-Elektronikgerät, wobei die dritte Benachrichtigung das Quell-Elektronikgerät anweist, die Bluetooth-Audiodaten unter Verwendung des Ziel-Elektronikgeräts an das Bluetooth-Peripheriegerät weiterzuleiten, und das Quell-Elektronikgerät ein Elektronikgerät ist, das zu den mehreren Elektronikgeräten gehört und die Bluetooth-Audiodaten von einem Ferngerät erhält;
**dadurch gekennzeichnet, dass** das Verfahren vor dem Schritt des Sendens einer ersten Benachrichtigung an das Bluetooth-Peripheriegerät ferner umfasst:
Erkennen, ob das Umschalten eines elektronischen Geräts, das die Bluetooth-Audiodaten an das Bluetooth-Peripheriegerät überträgt, innerhalb einer voreingestellten Dauer vor einem aktuellen Zeitpunkt erfolgt; und wenn das Umschalten des elektronischen Geräts, das die Bluetooth-Audiodaten an das Bluetooth-Peripheriegerät überträgt, nicht innerhalb der voreingestellten Dauer vor dem aktuellen Zeitpunkt erfolgt, den Schritt des Sendens einer ersten Benachrichtigung an das Bluetooth-Peripheriegerät ausführen; oder wenn das Umschalten des elektronischen Geräts, das die Bluetooth-Audiodaten an das Bluetooth-Peripheriegerät überträgt, innerhalb der voreingestellten Dauer vor dem aktuellen Zeitpunkt erfolgt, den Schritt des Sendens einer ersten Benachrichtigung an das Bluetooth-Peripheriegerät überspringen.

2. Das Verfahren nach Anspruch 1, wobei die Ermittlung der Verbindungsqualität zwischen einem Bluetooth-Peripheriegerät und einer Vielzahl von elektronischen Geräten umfasst: Ermittlung der Empfangssignalstärkeindikatoren, RSSIs, zwischen dem Bluetooth-Peripheriegerät und der Vielzahl von elektronischen Geräten; und
der Schritt der Bestimmung, basierend auf der erhaltenen Vielzahl von Verbindungsqualitäten, eines Ziel-Elektronikgeräts, das auf das Senden von Bluetooth-Audiodaten an das Bluetooth-Peripheriegerät umgeschaltet werden soll, umfasst:
Erkennen, ob ein RSSI, der dem aktuellen elektronischen Gerät entspricht, kleiner als ein erster RSSI-Schwellenwert ist, und Erkennen, ob ein RSSI, der einem anderen elektronischen Gerät entspricht, größer als ein zweiter RSSI-Schwellenwert ist, wobei das andere elektronische Gerät ein elektronisches Gerät aus der Vielzahl von elektronischen Geräten ist, außer dem aktuellen elektronischen Gerät; und
Wenn der RSSI des aktuellen elektronischen Geräts kleiner als der erste RSSI-Schwellenwert ist und der RSSI eines anderen elektronischen Geräts größer als der zweite RSSI-Schwellenwert ist, wird das andere elektronische Gerät als Zielgerät bestimmt; oder
Wenn der RSSI-Wert des aktuellen elektronischen Geräts größer oder gleich dem ersten RSSI-Schwellenwert ist und/oder der RSSI-Wert eines anderen elektronischen Geräts kleiner oder gleich dem zweiten RSSI-Schwellenwert ist, wird das aktuelle elektronische Gerät als Zielgerät bestimmt.

3. Das Verfahren nach Anspruch 1, wobei die Ermittlung der Verbindungsqualität zwischen einem Bluetooth-Peripheriegerät und einer Vielzahl von elektronischen Geräten umfasst: Ermitteln der Entfernungen zwischen dem Bluetooth-Peripheriegerät und der Vielzahl von elektronischen Geräten; und
der Schritt der Bestimmung, basierend auf der erhaltenen Vielzahl von Verbindungsqualitäten, eines Ziel-Elektronikgeräts, das zum Senden von Bluetooth-Audiodaten an das Bluetooth-Peripheriegerät umgeschaltet werden soll, umfasst:
Erkennen, ob eine Entfernung, die dem aktuellen elektronischen Gerät entspricht, größer als ein erster Entfernungsgrenzwert ist, und Erkennen, ob eine Entfernung, die einem anderen elektronischen Gerät entspricht, kleiner als ein zweiter Entfernungsgrenzwert ist, wobei das andere elektronische Gerät ein elektronisches Gerät ist, außer dem aktuellen elektronischen Gerät, der Vielzahl von elektronischen Geräten; und
Wenn der Abstand, der dem aktuellen elektronischen Gerät entspricht, größer als der erste Abstandsgrenzwert ist und der Abstand, der einem anderen elektronischen Gerät entspricht, kleiner als der zweite Abstandsgrenzwert ist, wird das andere elektronische Gerät als Zielgerät bestimmt; oder
Wenn der Abstand, der dem aktuellen elektronischen Gerät entspricht, kleiner oder gleich dem ersten Abstandsgrenzwert ist, und/oder der Abstand, der einem anderen elektronischen Gerät entspricht, größer oder gleich dem zweiten Abstandsgrenzwert ist, wird bestimmt, dass das aktuelle elektronische Gerät das Zielgerät ist.

4. Das Verfahren nach Anspruch 3, wobei der Schritt des Ermittelns der Entfernungen zwischen dem Bluetooth-Peripheriegerät und der Vielzahl von elektronischen Geräten umfasst: Messen der Entfernungen zwischen dem Bluetooth-Peripheriegerät und der Vielzahl von elektronischen Geräten unter Verwendung eines Bluetooth-Low-Energy-Entfernungsalgorithmus oder eines Indoor-Positionierungsalgorithmus.

5. Ein Datenverarbeitungsverfahren, angewendet auf ein Quell-Elektronikgerät einer Vielzahl von Elektronikgeräten, wobei die Vielzahl von Elektronikgeräten berechtigt sind, verbunden zu werden, das Quell-Elektronikgerät ein Elektronikgerät aus der Vielzahl von Elektronikgeräten ist und Bluetooth-Audiodaten von einem Ferngerät erhält, und das Verfahren umfasst:
Erhalten (S111) der Bluetooth-Audiodaten vom Remote-Gerät; und
Senden (S112) der Bluetooth-Audiodaten an ein Bluetooth-Peripheriegerät unter Verwendung eines Ziel-Elektronikgeräts, wobei das Ziel-Elektronikgerät ein Elektronikgerät ist, das von einem Hauptsteuergerät unter Verwendung des Verfahrens nach Anspruch 1 basierend auf der Verbindungsqualität zwischen dem Bluetooth-Peripheriegerät und der Vielzahl von Elektronikgeräten bestimmt wird, um das Senden der Bluetooth-Audiodaten an das Bluetooth-Peripheriegerät zu übernehmen, wobei das Ziel-Elektronikgerät sich von einem aktuellen Elektronikgerät unterscheidet und das aktuelle Elektronikgerät ein Elektronikgerät ist, das derzeit die Bluetooth-Audiodaten an das Bluetooth-Peripheriegerät sendet; das Ziel-Elektronikgerät ist ein beliebiges Elektronikgerät unter der Vielzahl von Elektronikgeräten;
wobei der Schritt des Sendens der Bluetooth-Audiodaten an ein Bluetooth-Peripheriegerät unter Verwendung des Ziel-Elektronikgeräts umfasst:
Empfangen einer dritten Benachrichtigung, die vom Hauptsteuergerät gesendet wird, wobei die dritte Benachrichtigung das Quell-Elektronikgerät anzeigt, um die Bluetooth-Audiodaten mithilfe des Ziel-Elektronikgeräts an das Bluetooth-Peripheriegerät weiterzuleiten; und
Senden der Bluetooth-Audiodaten an das Bluetooth-Peripheriegerät unter Verwendung des durch die dritte Benachrichtigung angegebenen Zielgeräts;
Die dritte Benachrichtigung ist eine Benachrichtigung, die vom Hauptsteuergerät gesendet wird, nachdem es die zweite Benachrichtigung vom Bluetooth-Peripheriegerät erhalten hat, wobei die zweite Benachrichtigung anzeigt, dass das Bluetooth-Peripheriegerät die Vorbereitung zum Abrufen der Bluetooth-Audiodaten vom Zielgerät abgeschlossen hat.

6. Das Verfahren nach Anspruch 5, wobei der Schritt des Sendens der Bluetooth-Audiodaten an ein Bluetooth-Peripheriegerät unter Verwendung eines Ziel-Elektronikgeräts umfasst:
Wenn das Zielgerät das Quellgerät ist, senden der Bluetooth-Audiodaten an das Bluetooth-Peripheriegerät; oder
Wenn das Ziel-Elektronikgerät ein anderes Elektronikgerät ist, das anzeigt, dass das andere Elektronikgerät die Bluetooth-Audiodaten an das Bluetooth-Peripheriegerät senden soll, wobei das andere Elektronikgerät ein Elektronikgerät ist, außer dem Quell-Elektronikgerät, aus der Vielzahl von Elektronikgeräten.

7. Das Verfahren nach Anspruch 6, wobei der Schritt, das andere elektronische Gerät anzuzeigen, die Bluetooth-Audiodaten an das Bluetooth-Peripheriegerät zu senden, umfasst:
Senden der Bluetooth-Audiodaten an das andere elektronische Gerät, um dem anderen elektronischen Gerät zu ermöglichen, die Bluetooth-Audiodaten an das Bluetooth-Peripheriegerät weiterzuleiten.

8. Das Verfahren nach Anspruch 6, wobei eine Anwendung zum Abspielen der Bluetooth-Audiodaten auf dem Quell-Elektronikgerät und dem anderen Elektronikgerät installiert ist; und
der Schritt, ein anderes elektronisches Gerät anzugeben, um die Bluetooth-Audiodaten an das Bluetooth-Peripheriegerät zu senden, umfasst:
Senden von Adressinformationen der Bluetooth-Audiodaten an das andere elektronische Gerät, wobei die Adressinformationen ein Bezeichner oder ein Link der Bluetooth-Audiodaten in der Anwendung sind, um dem anderen elektronischen Gerät zu ermöglichen, die Bluetooth-Audiodaten entsprechend den Adressinformationen zu erhalten und die erhaltenen Bluetooth-Audiodaten an das Bluetooth-Peripheriegerät zu senden.

9. Das Verfahren nach Anspruch 6, wobei der Schritt des Anzeigens des anderen elektronischen Geräts, die Bluetooth-Audiodaten an das Bluetooth-Peripheriegerät zu senden, umfasst:
Wenn die Verbindungsqualität zwischen dem anderen elektronischen Gerät und dem Quellgerät unter einem ersten voreingestellten Verbindungsqualitätsschwellenwert liegt, weist das Relaisgerät das andere elektronische Gerät an, die Bluetooth-Audiodaten an das Bluetooth-Peripheriegerät zu senden, wobei das Relaisgerät eines der mehreren elektronischen Geräte oder ein Gerät mit einem Bluetooth-Modul ist.

10. Das Verfahren nach Anspruch 5, wobei der Schritt des Erhaltens der Bluetooth-Audiodaten von der Fernvorrichtung umfasst:
Wenn die Verbindungsqualität zwischen dem Ferngerät und dem Quellgerät unter einem zweiten voreingestellten Verbindungsqualitätsschwellenwert liegt, wird unter Verwendung eines Relaisgeräts die Bluetooth-Audiodaten vom Ferngerät bezogen, wobei das Relaisgerät eines der mehreren elektronischen Geräte oder ein Gerät mit einem Bluetooth-Modul ist.

11. Das Verfahren nach Anspruch 5, wobei das Verfahren ferner umfasst:
Wenn der Abstand zwischen zwei der mehreren elektronischen Geräte kleiner als ein voreingestellter Abstand ist, erhalten die beiden elektronischen Geräte ein von den beiden elektronischen Geräten und dem Bluetooth-Peripheriegerät separat unterstütztes Bluetooth-Link-Codierungsformat; und eine Bluetooth-Verbindung zwischen den beiden elektronischen Geräten basierend auf dem erhaltenen Bluetooth-Link-Codierungsformat herstellen, wobei die beiden elektronischen Geräte über die Bluetooth-Verbindung kommunizieren.

12. Das Verfahren nach Anspruch 11, wobei der Schritt des Aufbaus einer Bluetooth-Verbindung zwischen den beiden elektronischen Geräten basierend auf dem erhaltenen Bluetooth-Verbindungscodierungsformat umfasst: Aufbau der Bluetooth-Verbindung zwischen den beiden elektronischen Geräten in einem Bluetooth-Verbindungscodierungsformat, das sowohl von den beiden elektronischen Geräten als auch vom Bluetooth-Peripheriegerät unterstützt wird.

13. Ein Datenverarbeitungssystem, wobei das System eine Vielzahl von elektronischen Geräten (1201) und ein Bluetooth-Peripheriegerät (1202) umfasst, die Vielzahl von elektronischen Geräten autorisiert sind, verbunden zu werden, und das Bluetooth-Peripheriegerät oder eines der Vielzahl von elektronischen Geräten als Hauptsteuergerät verwendet wird;
Die Hauptsteuereinheit ist so konfiguriert, dass sie das Verfahren gemäß einem der Ansprüche 1 bis 4 durchführt; und
Ein Quell-Elektronikgerät der Vielzahl von Elektronikgeräten ist so konfiguriert, dass es das Verfahren gemäß einem der Ansprüche 5 bis 12 durchführt.

14. Ein elektronisches Gerät, umfassend:
ein Speicher (1301), konfiguriert, um Anweisungen zu speichern, die von einem oder mehreren Prozessoren des Geräts ausgeführt werden; und
ein Prozessor (1302), konfiguriert, um die Anweisungen auszuführen, um das elektronische Gerät zu befähigen, das Verfahren gemäß einem der Ansprüche 1 bis 4 oder Ansprüche 5 bis 12 durchzuführen.

## Revendications

1. Un procédé de traitement de données, le procédé étant appliqué à un dispositif de contrôle principal (301) et comprenant :
obtention (S91) de la qualité de lien entre un périphérique Bluetooth (303) et une pluralité de dispositifs électroniques, où la pluralité de dispositifs électroniques sont autorisés à être connectés;
déterminer (S92), en fonction de la pluralité de pièces de qualité de lien obtenues, un dispositif électronique cible (302) qui doit être commuté pour envoyer des données audio Bluetooth au périphérique Bluetooth ; le dispositif électronique cible est n'importe quel dispositif électronique parmi la pluralité de dispositifs électroniques, et
si le dispositif électronique cible est différent d'un dispositif électronique actuel, envoyer (S93) une première notification au périphérique Bluetooth, où la première notification indique au périphérique Bluetooth d'obtenir les données audio Bluetooth du dispositif électronique cible, et le dispositif électronique actuel est un dispositif électronique qui envoie actuellement les données audio Bluetooth au périphérique Bluetooth;
où la méthode comprend en outre :
recevoir une deuxième notification envoyée par le périphérique Bluetooth, la deuxième notification indiquant que le périphérique Bluetooth a terminé la préparation pour obtenir les données audio Bluetooth de l'appareil électronique cible; et
envoi d'une troisième notification à un appareil électronique source, la troisième notification indiquant à l'appareil électronique source de transférer les données audio Bluetooth au périphérique Bluetooth en utilisant l'appareil électronique cible, et l'appareil électronique source étant un appareil électronique parmi la pluralité d'appareils électroniques et obtenant les données audio Bluetooth d'un appareil distant;
**caractérisé en ce que**, avant l'étape d'envoi d'une première notification au périphérique Bluetooth, le procédé comprend en outre :
détecter si le changement d'un appareil électronique qui transmet les données audio Bluetooth au périphérique Bluetooth se produit dans une durée prédéfinie avant un point de temps actuel ; et si le changement de l'appareil électronique qui transmet les données audio Bluetooth au périphérique Bluetooth ne se produit pas dans la durée prédéfinie avant le point de temps actuel, effectuer l'étape d'envoi d'une première notification au périphérique Bluetooth ; ou si le changement de l'appareil électronique qui transmet les données audio Bluetooth au périphérique Bluetooth se produit dans la durée prédéfinie avant le point de temps actuel, sauter l'étape d'envoi d'une première notification au périphérique Bluetooth.

2. Le procédé selon la revendication 1, dans lequel l'obtention de la qualité de liaison entre un périphérique Bluetooth et une pluralité de dispositifs électroniques comprend : l'obtention des indicateurs de puissance du signal reçu, RSSI, entre le périphérique Bluetooth et la pluralité de dispositifs électroniques ; et
l'étape de détermination, sur la base de la pluralité de pièces de qualité de lien obtenues, d'un dispositif électronique cible devant être commuté pour envoyer des données audio Bluetooth au périphérique Bluetooth comprend :
détecter si un RSSI correspondant au dispositif électronique actuel est inférieur à un premier seuil de RSSI, et détecter si un RSSI correspondant à un autre dispositif électronique est supérieur à un deuxième seuil de RSSI, où l'autre dispositif électronique est un dispositif électronique, à l'exception du dispositif électronique actuel, parmi la pluralité de dispositifs électroniques; et
si le RSSI correspondant à l'appareil électronique actuel est inférieur au premier seuil de RSSI, et que le RSSI correspondant à un autre appareil électronique est supérieur au deuxième seuil de RSSI, déterminer l'autre appareil électronique comme l'appareil électronique cible; ou
si le RSSI correspondant au dispositif électronique actuel est supérieur ou égal au premier seuil de RSSI, et/ou si le RSSI correspondant à un autre dispositif électronique est inférieur ou égal au deuxième seuil de RSSI, déterminer le dispositif électronique actuel comme le dispositif électronique cible.

3. Le procédé selon la revendication 1, dans lequel l'obtention de la qualité de liaison entre un périphérique Bluetooth et une pluralité de dispositifs électroniques comprend : l'obtention des distances entre le périphérique Bluetooth et la pluralité de dispositifs électroniques ; et
l'étape de détermination, sur la base de la pluralité de pièces de qualité de lien obtenues, d'un appareil électronique cible qui doit être commuté pour envoyer des données audio Bluetooth au périphérique Bluetooth comprend :
détecter si une distance correspondant au dispositif électronique actuel est supérieure à un premier seuil de distance, et détecter si une distance correspondant à un autre dispositif électronique est inférieure à un deuxième seuil de distance l'autre dispositif électronique étant un dispositif électronique, à l'exception du dispositif électronique actuel, parmi la pluralité de dispositifs électroniques; et
si la distance correspondant au dispositif électronique actuel est supérieure au premier seuil de distance, et la distance correspondant à un autre dispositif électronique est inférieure au deuxième seuil de distance, déterminer l'autre dispositif électronique comme le dispositif électronique cible; ou
si la distance correspondant au dispositif électronique actuel est inférieure ou égale au premier seuil de distance, et/ou si la distance correspondant à un autre dispositif électronique est supérieure ou égale au deuxième seuil de distance, déterminer que le dispositif électronique actuel est le dispositif électronique cible.

4. Le procédé selon la revendication 3, dans lequel l'étape d'obtention des distances entre le périphérique Bluetooth et la pluralité de dispositifs électroniques comprend : mesurer les distances entre le périphérique Bluetooth et la pluralité de dispositifs électroniques en utilisant un algorithme de mesure de distance Bluetooth basse énergie ou un algorithme de positionnement intérieur.

5. Un procédé de traitement de données, appliqué à un dispositif électronique source parmi une pluralité de dispositifs électroniques, où la pluralité de dispositifs électroniques sont autorisés à être connectés, le dispositif électronique source est un dispositif électronique de la pluralité de dispositifs électroniques et qui obtient des données audio Bluetooth d'un dispositif distant, et le procédé comprend :
obtention (S111) des données audio Bluetooth à partir de l'appareil distant; et
envoi (S112) des données audio Bluetooth à un périphérique Bluetooth en utilisant un dispositif électronique cible, le dispositif électronique cible étant un dispositif électronique déterminé par un dispositif de contrôle principal en utilisant la méthode de la revendication 1, basé sur la qualité de la liaison entre le périphérique Bluetooth et la pluralité de dispositifs électroniques, pour être commuté à l'envoi des données audio Bluetooth au périphérique Bluetooth, le dispositif électronique cible étant différent d'un dispositif électronique actuel, et le dispositif électronique actuel étant un dispositif électronique qui envoie actuellement les données audio Bluetooth au périphérique Bluetooth; le dispositif électronique cible étant n'importe quel dispositif électronique parmi la pluralité de dispositifs électroniques;
où l'étape d'envoi des données audio Bluetooth à un périphérique Bluetooth à l'aide de l'appareil électronique cible comprend :
réception d'une troisième notification envoyée par le dispositif de contrôle principal, la troisième notification indiquant que le dispositif électronique source doit transférer les données audio Bluetooth au périphérique Bluetooth en utilisant le dispositif électronique cible;
envoi des données audio Bluetooth au périphérique Bluetooth en utilisant le dispositif électronique cible indiqué par la troisième notification;
la troisième notification est une notification envoyée par le dispositif de contrôle principal après avoir reçu la deuxième notification envoyée par le périphérique Bluetooth, la deuxième notification indiquant que le périphérique Bluetooth a terminé la préparation pour obtenir les données audio Bluetooth de l'appareil électronique cible.

6. Le procédé selon la revendication 5, dans lequel l'étape d'envoi des données audio Bluetooth à un périphérique Bluetooth à l'aide d'un dispositif électronique cible comprend :
lorsque le dispositif électronique cible est le dispositif électronique source, envoyer les données audio Bluetooth au périphérique Bluetooth ; ou
lorsque le dispositif électronique cible est un autre dispositif électronique, indiquant à cet autre dispositif électronique d'envoyer les données audio Bluetooth au périphérique Bluetooth, cet autre dispositif électronique étant un dispositif électronique, à l'exception du dispositif électronique source, parmi la pluralité de dispositifs électroniques.

7. Le procédé selon la revendication 6, dans lequel l'étape consistant à indiquer à l'autre dispositif électronique d'envoyer les données audio Bluetooth au périphérique Bluetooth comprend :
envoyer les données audio Bluetooth à un autre appareil électronique, afin de permettre à cet autre appareil électronique de transmettre les données audio Bluetooth au périphérique Bluetooth.

8. Le procédé selon la revendication 6, dans lequel une application pour lire les données audio Bluetooth est installée sur le dispositif électronique source et l'autre dispositif électronique; et
l'étape d'indiquer un autre dispositif électronique pour envoyer les données audio Bluetooth au périphérique Bluetooth comprend :
envoi des informations d'adresse des données audio Bluetooth à un autre dispositif électronique, où les informations d'adresse sont un identifiant ou un lien des données audio Bluetooth dans l'application, afin de permettre à l'autre dispositif électronique d'obtenir les données audio Bluetooth correspondant aux informations d'adresse et d'envoyer les données audio Bluetooth obtenues au périphérique Bluetooth.

9. Le procédé selon la revendication 6, dans lequel l'étape consistant à indiquer à l'autre dispositif électronique d'envoyer les données audio Bluetooth au périphérique Bluetooth comprend :
lorsque la qualité de la liaison entre l'autre appareil électronique et l'appareil électronique source est inférieure à un premier seuil de qualité de liaison prédéfini, indiquer, en utilisant un appareil relais, à l'autre appareil électronique d'envoyer les données audio Bluetooth au périphérique Bluetooth, l'appareil relais étant l'un des nombreux appareils électroniques ou un appareil comprenant un module Bluetooth.

10. Le procédé selon la revendication 5, dans lequel l'étape d'obtention des données audio Bluetooth à partir du dispositif distant comprend :
lorsque la qualité de la liaison entre le dispositif distant et le dispositif électronique source est inférieure à un deuxième seuil de qualité de liaison prédéfini, obtenir, en utilisant un dispositif relais, les données audio Bluetooth du dispositif distant, le dispositif relais étant l'un des multiples dispositifs électroniques ou un dispositif comprenant un module Bluetooth.

11. Le procédé selon la revendication 5, dans lequel le procédé comprend en outre :
lorsque la distance entre deux des multiples dispositifs électroniques est inférieure à une distance prédéfinie, les deux dispositifs électroniques obtiennent un format de codage de lien Bluetooth pris en charge séparément par les deux dispositifs électroniques et le périphérique Bluetooth ; et établissent un lien Bluetooth entre les deux dispositifs électroniques basé sur le format de codage de lien Bluetooth obtenu, les deux dispositifs électroniques communiquant via le lien Bluetooth.

12. Le procédé selon la revendication 11, dans lequel l'étape d'établissement d'un lien Bluetooth entre les deux dispositifs électroniques sur la base du format de codage de lien Bluetooth obtenu comprend : établir le lien Bluetooth entre les deux dispositifs électroniques dans un format de codage de lien Bluetooth pris en charge à la fois par les deux dispositifs électroniques et le périphérique Bluetooth.

13. Un système de traitement de données, dans lequel le système comprend une pluralité de dispositifs électroniques (1201) et un périphérique Bluetooth (1202), la pluralité de dispositifs électroniques sont autorisés à être connectés, et le périphérique Bluetooth ou l'un quelconque de la pluralité de dispositifs électroniques est utilisé comme dispositif de contrôle principal;
le dispositif de commande principal est configuré pour exécuter le procédé selon l'une quelconque des revendications 1 à 4; et
un dispositif électronique source de la pluralité de dispositifs électroniques est configuré pour exécuter le procédé selon l'une quelconque des revendications 5 à 12.

14. Un dispositif électronique, comprenant :
une mémoire (1301), configurée pour stocker des instructions exécutées par un ou plusieurs processeurs de l'appareil; et
un processeur (1302), configuré pour exécuter les instructions, afin de permettre à l'appareil électronique d'exécuter la méthode selon l'une quelconque des revendications 1 à 4 ou des revendications 5 à 12.
